# EUROPEAN PATENT SPECIFICATION

(11) **EP 4 197 683 B1**
(45) Date of publication and mention of the grant of the patent: **20.05.2026**
(21) Application number: 22206312.5
(22) Date of filing: 09.11.2022
(51) Int. Cl.: B23K 26/03, B23K 26/082, B23K 26/08

(54) **LASER PROCESSING APPARATUS AND LASER PROCESSING METHOD**
LASERBEARBEITUNGSVORRICHTUNG UND LASERBEARBEITUNGSVERFAHREN
APPAREIL DE TRAITEMENT LASER ET PROCÉDÉ DE TRAITEMENT LASER

(30) Priority: 15.11.2021 JP 2021185485
(43) Date of publication of application: 21.06.2023
(73) Proprietor: Ricoh Company, Ltd., Tokyo 143-8555 (JP)
(72) Inventor: WATANABE, Kazunori, Tokyo, 143-8555 (JP); TANABE, Hiroyuki, Tokyo, 143-8555 (JP)
(74) Representative: SSM Sandmair

(56) References cited:
- EP-A1- 0 495 647
- US-A1- 2003 164 358

## Description

### BACKGROUND

### Technical Field

The present disclosure relates to a laser processing apparatus and a laser processing method , such as known from EP 0 495 647.

### Related Art

Recently, plastic wastes have caused ocean plastic pollution. Activities to reduce or eliminate plastic wastes are intensified worldwide. A plastic bottle such as a polyethylene terephthalate (PET) bottle is a cause of the plastic wastes. However, a large amount of the plastic bottles for beverage is produced, sold, and used, because the plastic bottle has advantages in distribution, sale, and storage.

Most PET bottles for beverage have a label attached on the PET bottles for the purpose of product management and sales promotion. Many pieces of information indispensable for consumers, for example, a product name, ingredients, an expiration date, a barcode, a QR code (registered trademark), a recycle symbol, and a logo, are printed on the label. In addition, pictures or illustrations designed by beverage manufacturers to attract consumer's attention are printed on the label. Such pictures or illustrations differentiate one product form other products or increase in competitiveness. As described above, a label on which many pieces of information are printed is usually attached to the plastic bottle such as a PET bottle for beverage.

Such a PET bottle for beverage having the label is collected for the purpose of recycling to reduce the environmental load, after consumers consume the content of the PET bottle. Recycling the PET bottle for beverage is referred to as "bottle to bottle" which promotes circular recycling. In the circular recycling of the PET bottle for beverage, a used PET bottle is separated and collected, converted into flakes as a raw material of the PET bottle for beverage by a recycler, and reproduced as the PET bottle. In particular, proper separation and collection of the used PET bottle facilitates the circular recycling.

The PET bottle for beverage includes the label and the cap made of different materials. Thus, the PET bottle, the label, and the cap are properly separated from each other in the recycling. Although the consumer separates the cap and label from each PET bottle, it is inconvenient for the consumer. The cap is inevitably removed from the PET bottle because the consumer removes the cap before drinking. However, the label is manually peeled off and separated by the consumer (i.e., manual process). The manual process in recycling may be inconvenience for the consumer. In other words, the manual process causes difficulties in recycling the PET bottle for beverage in mass consumption.

When using a carbon dioxide laser, simple symbols or numbers are formed on a portion of the plastic bottle (i.e., forming portion) instead of the plastic label. However, there is a limitation in forming an image having a large amount of information. In addition, there is a difficulty in recognizing the symbols or numbers formed on the forming portion, because the color of the forming portion does not change so much, or the forming portion and the other portions does not have a large difference. Preferably, a plastic bottle does not have a plastic label (i.e., a label-less bottle) and is easy to recycle.

For example, Japanese Patent No. 5906115 disclosures a configuration of an optical scanning device including a polygon mirror. In order to reduce uneven machining, the optical scanning device rotates the polygon mirror at non-constant speed to reduce a variation of a scanning speed in which the polygon mirror rotates at constant speed. However, since the polygon mirror is mainly produced by cutting aluminum, the polygon mirror does not have laser resistance to higher power of the laser for mass production.

### SUMMARY

In view of the above circumstances, embodiments of the present invention aim at providing a laser processing apparatus and laser processing method to directly form a pattern such as characters, numbers, symbols, or images including a large amount of information with higher resolution and at higher speed on the workpiece such as plastic bottles (e.g., PET bottle).

A laser processing apparatus in accordance with the invention is defined in claim 1.

A laser processing method in accordance with the invention is defined in claim 8.

According to the embodiments of the present invention, a laser processing apparatus and a laser processing method directly form a character, a symbol, a number, or an image having a large amount of information with higher resolution at a higher speed are provided.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
FIG. 1A is a plane view of a laser processing apparatus to from a desired processing shape on the surface of the PET bottle as a workpiece according to the first embodiment:
FIG. 1B is a side view of the laser processing apparatus in FIG. 1A;
FIG. 2A is a diagram of a scanning operation in a processing area;
FIG. 2B is a diagram of a processing shape formed on the workpiece;
FIG. 2C is another diagram of a processing shape formed on the workpiece;
FIG. 3A is a diagram of the character sting formed by minute concave dots by the laser processing;
FIG. 3B is a diagram of a portion of the character string in FIG. 3A;
FIG. 3C is a diagram of a modification example of FIG. 3A;
FIG. 4 is a diagram of a processing shape in a case where the character strings aligned in the main-scanning direction are arranged side by side in the sub-scanning direction;
FIG. 5A is a diagram of a laser processing apparatus scanning the workpiece with the laser light in the sub-scanning direction by the light scanner according to the second embodiment;
FIG. 5B is an enlarged view of the workpiece and its surroundings in FIG. 5A;
FIG. 6 is a diagram of a laser processing apparatus detecting the position of the PET bottle being conveyed according to a third embodiment;
FIG. 7 is a diagram of characters aligned in a character sting formed by the minute concave dots;
FIG. 8 is a diagram of characters formed by multiple minute structures in which one minute structure contains four minute dots;
FIG. 9 is a diagram of a character formed by multiple minute dots overlapping each other;
FIG. 10 is a diagram of a light scanner;
FIG. 11 is a diagram of an external appearance of the container as an example;
FIG. 12 is a diagram of an external appearance of the container as another example;
FIG. 13 is a diagram of external appearance of the container as yet another example;
FIG. 14 is a diagram of a surface property change caused by laser emission;
FIG. 15A is an enlarged view of a portion of a character formed by an aggregate of minute dots formed by changing the surface property;
FIG. 15B is a diagram of the portion of the character formed by an aggregate of minute square dots formed by changing the surface property;
FIG. 15C is a diagram of the portion of the character formed by an aggregate of minute circular dots formed by changing the surface property;
FIG. 15D is a diagram of an one-stroke pattern printed by an aggregate of minute lines formed by changing the surface property;
FIG. 16A is a diagram of variations of the gradation value by the pixel output on the container as an example;
FIG. 16B is a diagram of variations of the gradation value by the pixel output on the container as another example;
FIG. 16C is a diagram of variations of the gradation value by the pixel output on the container as yet another example;
FIG. 17A is a diagram of the container having an integrated printing according to the fifth embodiment;
FIG. 17B is an enlarged view of the integrated printing in FIG. 17A;
FIG. 18 is a diagram of the container having an integrated printing printed on a curved surface in the vicinity of a finish portion of the container as an example;
FIG. 19 is a diagram of the container having an integrated printing printed on a curved surface in the vicinity of a finish portion of the container as another example;
FIG. 20 is a diagram of the container having an integrated printing printed on a curved surface in the vicinity of the finish portion of a container as yet another example;
FIG. 21 is a diagram of variations in processing depth;
FIG. 22 is a diagram of spots and overlapped spots of the laser light in multi-beam processing;
FIG. 23 is a diagram of an example of a laser processing apparatus for the container according to the sixth embodiment;
FIG. 24 is a diagram of another example of the laser processing apparatus for the container according to the sixth embodiment;
FIG. 25 is a diagram of yet another example of the laser processing apparatus according to the sixth embodiment;
FIG. 26 is a diagram of a laser processing apparatus having a marking unit tilted with respect to a side of the container body so that minute dots are printed on a slope portion of the container body;
FIG. 27 is a diagram of a laser processing apparatus in which a container body is horizontally hold;
FIG. 28 is a functional block diagram of the laser processing apparatus for a container;
FIG. 29A is a diagram of a scanner of a laser driving unit in the laser processing apparatus for a container;
FIG. 29B is a flowchart of the laser processing using the laser processing apparatus in FIG. 29A;
FIG. 30A is a diagram of a configuration of a laser processing apparatus having an arrayed laser; and
FIG. 30B is a flowchart of the laser processing using the laser processing apparatus in FIG. 30A.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Referring now to the drawings, embodiments of the present disclosure are described below. As used herein, the singular forms "a," "an," and "the" are intended to include the plural forms as well, unless the context clearly indicates otherwise.

A PET bottle for beverage having the label is collected for the purpose of recycling to reduce the environmental load, after consumers consume the content of the PET bottle. Recycling the PET bottle for beverage is referred to as "bottle to bottle" which promotes circular recycling. In the circular recycling of the PET bottle for beverage, a used PET bottle is separated and collected, converted into flakes as a raw material of the PET bottle for beverage by a recycler, and reproduced as the PET bottle. In particular, proper separation and collection of the used PET bottle facilitates the circular recycling.

The PET bottle for beverage includes the label and the cap made of different materials. Thus, the PET bottle, the label, and the cap are properly separated from each other in the recycling. Although the consumer separates the cap and label from each PET bottle, it is inconvenient for the consumer. The cap is inevitably removed from the PET bottle because the consumer removes the cap before drinking. However, the label is manually peeled off and separated by the consumer (i.e., manual process). The manual process in recycling may be inconvenience for the consumer. In other words, the manual process causes difficulties in recycling the PET bottle for beverage in mass consumption.

### Laser Processing Apparatus and Laser Processing Method

A laser processing apparatus according to a first embodiment of the present invention includes: a light emitter (laser emitting unit, laser light source) to emit laser light to a workpiece to be processed; a light scanner (scanning unit, light scanning unit) to scan the workpiece with the laser light by a deflector and an imaging optical element; a conveyor to convey the workpiece to a processing area. The light scanner scans the workpiece with the laser light in a scanning direction orthogonal to the conveying direction and forms a processing shape on the workpiece being conveyed in the conveying direction by the conveyor. The processing shape has a length in the scanning direction longer than a length in the conveying direction.

A laser processing apparatus includes: a light emitter to emit laser light; a light scanner configured to scan a workpiece in a scanning direction with the laser light emitted from the light emitter, to process the workpiece; and a conveyor to convey the workpiece to a scanning area scanned by the light scanner in a conveying direction orthogonal to the scanning direction, a longitudinal direction of the scanning area is in the scanning direction.

A laser processing method according to the first embodiment of the present invention includes: emitting laser light to a workpiece; scanning the workpiece with laser light by a deflector and an imaging optical element; and conveying the workpiece to a processing area. The workpiece is scanned with the laser light in a scanning direction orthogonal to a conveying direction to form a processing shape on the workpiece being conveyed in the conveying direction. The processing shape has a scanning length longer than a conveyor length in a conveying direction orthogonal to a scanning direction.

In the laser processing apparatus, the light scanner scans the workpiece with the laser light in a longitudinal direction of the workpiece.

A laser processing method includes: emitting laser light; scanning a workpiece in a scanning direction with the laser light by emitting to process the workpiece; and conveying the workpiece to a scanning area scanned by the scanning in a conveying direction orthogonal to the scanning direction, a longitudinal direction of the scanning area is in the scanning direction.

In the laser processing apparatus, the conveying direction is in a horizontal direction, the scanning direction is in a vertical direction, and a longitudinal direction of the workpiece is in the vertical direction.

In the laser processing apparatus and the laser processing method according to the first embodiment, the galvano scanner serving as the light scanner reciprocally scans (i.e., reverse scanning directions) the workpiece with the laser light. Herein, such a scanning is referred to as raster scan or raster scanning. The galvano scanner decelerates and accelerates in response to the reverse scanning directions. At the time of deceleration and acceleration, the angle of the galvano scanner and the coordination corresponding the angle of the galvano scanner are hard to match. Thus, the time of the deceleration and the acceleration basically becomes a non-processing time. In order to reduce the time ratio of the non-processing time to the processing time, the time region operating with constant-speed of the galvano-scanner operation increases as much as possible. Accordingly, the productivity increases. In the case of forming a certain processing area, when a length in a direction in which the galvano scanner reciprocally scans (i.e., the main-scanning direction) is longer than a length in a direction orthogonal to the main-scanning direction (i.e., conveying direction, sub-scanning direction) in the processing area, productivity is increased. In addition, a pattern having a large amount of information such as an image is directly formed on the workpiece with higher resolution at higher speed.

In one aspect of the first embodiment of the present invention, the processing shape of the workpiece includes an aggregate including multiple minute dots. The minute dots are arranged side by side in a direction orthogonal to the scanning direction (i.e., conveying direction) at a certain interval.

In the laser processing apparatus, the light scanner further scans the workpiece with the laser light with a certain interval in the conveying direction to form a group of minute dots on the workpiece with the certain interval between the minute dots adjacent with each other.

In the present aspect, since the laser processing is performed by combining the raster scanning and conveying the workpiece, a predetermined interval (i.e., pitch) between minute dots is provided in the sub-scanning direction. Thus, any processing is performed at higher speed. The processing shape, which is an aggregate of minute dots, is formed by melting or deforming the surface of the workpiece by emitting laser light. The aggregate of minute dots may be formed by cutting or oxidation reaction. The aggregate includes multiple minute dots (microstructures). Depending on the resolution in the direction orthogonal to the scanning direction (i.e., conveying direction), there is a latitude of the interval (pitch) between two minute dots. For example, the interval is, for example, about 127 µm in the case of 200 dot per inch (dpi).

In one aspect of the first embodiment, the aggregate of the minute dots preferably includes a character string (i.e., characters are included in a string).

In the laser processing apparatus, the aggregate of the minute dots forms a character string.

According to the present aspect, since a character is formed by an aggregate of minute dots (minute-dot writing), the processing by the minute-dot writing becomes faster as compared with the processing by the vector scanning (single-stroke writing). The character string includes, for example, a number, an alphabet, a symbol, a character, a kanji, a hiragana, or a recognizable character, but is not limited thereto.

In one aspect of the first embodiment, the character string is formed in the scanning direction. In the character string, a predetermined interval (i.e., blank portion) between two minute dots in a direction orthogonal to the scanning direction is provided. In the laser processing apparatus, the light scanner forms multiple sets of the character string in the scanning direction on the workpiece, and the multiple sets of the character string are at a certain interval in the conveying direction.

According to the present aspect, since the light scanner does not scan the blank portion of the sub-scanning direction, the processing time is reduced.

In one aspect of the first embodiment, preferably, the deflector (e.g., galvano mirror) reciprocally scans the processing area with laser light. If the deflector performs one way scanning, non-processing time is caused by skipping one scanning line.

In the laser processing apparatus, the light scanner includes a deflector, and the deflector reciprocally scans the scanning area in the workpiece with the laser light.

Thus, according to the present aspect, for example, the non-processing time is reduced by the reciprocal scanning.

In one aspect of the first embodiment, the deflector may have two scan axes (i.e., main-scanning axis and sub-scanning axis, or a first scan axis and a second scan axis).

In the laser processing apparatus, the deflector is scannable around a first scan axis and a second scan axis directed in a different direction with the first scan axis.

According to the present aspect, the rate of the processing time is increased and the processing time is reduced by following the plastic bottle by the main-scanning axis and the sub-scanning axis.

In one aspect of the first embodiment of the present invention, preferably, two axes of the deflector are arranged in a direction orthogonal to the conveying direction.

The laser processing apparatus, the deflector scans the workpiece in the conveying direction around the first scan axis, and scans the workpiece in the scanning direction around the second scan axis.

According to the present aspect, the processing time is reduced by following the plastic bottle being conveyed by scanning in the sub-scanning direction.

In one aspect of the first embodiment of the present invention, the scanning frequency in the two axes of the deflector is preferably faster in the direction orthogonal to the conveying direction than in the conveying direction.

In the laser processing apparatus, a scanning frequency of the deflector in the scanning direction around the second scan axis is faster than a scanning frequency of the deflector in the conveying direction around the first scan axis.

According to the present aspect, the processing time is reduced by following the plastic bottle being conveyed by scanning in the sub-scanning direction.

In one aspect of the first embodiment of the present invention, preferably the scanning speed of the scanning axis in the conveying direction is slower than the conveying speed of the workpiece. According to the present aspect, the processing time is reduced by following the plastic bottle being conveyed by scanning in the sub-scanning direction.

According to a second embodiment of the present invention, a laser processing apparatus includes: light emitter to emit the laser light to the workpiece, a light scanner, which includes a deflector and an imaging optical element, to scan the workpiece with the laser light, and the conveyor to convey the workpiece to a processing area. The laser processing apparatus forms a processing shape on the workpiece. The processing shape has a longer length in the main-scanning direction than a length in a direction orthogonal to the main-scanning direction. According to a second embodiment of the present invention, a laser processing method includes: emitting laser light to a workpiece, scanning the workpiece with the laser light using a deflector and an imaging optical element; and conveying the workpiece to a processing area. The workpiece being conveyed is processed by the scanning laser light to form a processing shape. The processing shape has a longer length in the main-scanning direction than a length in a direction orthogonal to the main-scanning direction.

In the laser processing apparatus and the laser processing method according to the second embodiment of the present invention, the conveying direction and the scanning direction restricted in the first embodiment are removed are not restricted. Since the processing length in the scanning direction by the deflector is longer and the processing length in the direction orthogonal to the scanning direction is shorter in the processing area, the processing speed becomes higher.

In the laser processing apparatus, a scanning speed of the deflector in the conveying direction around the first scan axis is slower than a conveying speed of the workpiece by the conveyor.

In one aspect of the second embodiment, the scanning direction is determined by a longitudinal direction of the workpiece to maximize a projection area on a plane.

In the laser processing apparatus, a length of the scanning area in the scanning direction is longer than a length of the scanning area in the conveying direction.

According to the present aspect, processing speed is increased by matching the longitudinal direction of the PET bottle and the scanning direction.

A laser processing apparatus according to a third embodiment of the present invention includes: a light emitter to emit laser light to an workpiece to be processed; a light scanner to scan the workpiece by a deflector and an imaging optical element; a conveyor to convey the workpiece to a processing area; and the detection unit to detect information on conveyor position of the workpiece. The light scanner scans the workpiece with the laser light in a scanning direction orthogonal to the conveying direction and forms a processing shape on the workpiece being conveyed in the conveying direction by the conveying unit. The deflector also deflects the laser light in the conveying direction and deflects in advance of the processing of the workpiece. The deflector deflects the laser light to a starting position at which the processing of the workpiece starts, and the start timing of the process is determined by the information on conveyor position. A laser processing method according to the third embodiment of the present invention includes: emitting laser light to a workpiece; scanning the workpiece with laser light using a deflector and an imaging optical element; conveying the workpiece to a processing area. The workpiece is scanned with the laser light in a scanning direction orthogonal to a conveying direction to form a processing shape on the workpiece being conveyed in the conveying direction. The processing shape has a scanning length longer than a conveyor length in a conveying direction orthogonal to a scanning direction. The deflector turns to the conveying direction in advance of the processing of the workpiece. The deflector deflects the laser light to the processing start position of the workpiece conveyed and determine the processing timing based on the detection information by the detection step.

The laser processing apparatus further includes: a detector to detect the workpiece conveyed by the conveyor; and circuitry (system controller 100) to control the light scanner and the conveyor. The light scanner includes a deflector that deflects the laser light in the conveying direction before the light scanner processes the workpiece; and that deflects the laser light to a start position to process the workpiece, and the circuitry determines a start timing to start processing the workpiece based on a position of the workpiece detected by the detector.

A laser processing apparatus according to a third aspect of the present invention include a detection unit to detect positional information on a workpiece on the conveyor. A laser processing method includes detecting positional information on a workpiece on the conveyor. The deflector may deflect the laser light to the conveying direction in advance of processing time for the workpiece. The deflector deflects and stops the laser light at the processing start position of the workpiece. The timing of the start processing is determined by the positional information detected by the detection unit. The conveyance speed of the workpiece may be acquired from an encoder provided in the conveyor, may be calculated from a time taken for a known shape to pass through the detection unit using the detection unit, or may be other means as long as the conveying speed immediately before the processing can be acquired. The detection unit to detect conveyor positional information on the workpiece may include a light projection part and a light receiving part. Preferably, the light projection part and the light receiving part are arranged at opposite sides each other across the workpiece. The laser processing method further includes detecting conveyer-position information on the workpiece. The deflector deflects the laser light in the conveying direction in advance of processing the workpiece; and deflects the laser light to a start position of the processing, and the deflector determines a start timing of the processing based on the conveyer-position information. Laser light such as infrared light (i.e., infrared laser light) is emitted from the light projecting part, and the infrared laser light is received by a light receiving element (e.g., a photoelectric conversion element) of the light receiving part. The workpiece is detected by passing through the infrared laser light between the light projection part and the light receiving part.

The laser processing method further includes: detecting the workpiece conveyed by the conveying; and deflecting the laser light in the conveying direction before processing the workpiece; and, deflecting the laser light to a start position to process the workpiece, and determining a start timing to start processing the workpiece based on a position of the workpiece detected by the detecting.

In one aspect of the third embodiment of the present invention, the processing shape of the workpiece has a length in the scanning direction longer than a length in conveying direction. According to the present aspect, the processing time is decreased by following the sub-scanning, and the laser processing accurately is performed at a desired position on the workpiece.

### Light Emitting Step and Light Emitter

The light emitting step is a step in which the laser emitter emits the laser light to the workpiece. Preferably, the laser light source emits pulse laser light. The laser light source emits the laser light having an output power (i.e., light intensity) suitable for changing the property of at least one of the surface or the inside of the workpiece. In the laser light source, turning on and turning off the laser emission, frequency and the intensity of the laser beam are controlled. For example, the laser light source has a wavelength of 355 nm to 1064 nm, a pulse width of 1 picoseconds (ps) to 10 nanoseconds (ns), and an average power of 10 to 50W. The spot diameter of the laser light on which a portion of the workpiece is processed is preferably from 1 µm or larger to 200 µm or smaller, more preferably from 10 µm or larger to 100 µm or smaller.

### Workpiece

The workpiece may be appropriately selected according to applications. In particular, there is no limitation as long as it can be laser-processed. Examples of the workpiece include a container such as a plastic bottle, for example, a polyethylene terephthalate (PET) bottle (i.e., PET bottle) for beverage, a resin material on which a product, ingredients, an expiration date, a manufacturer logo, and a product name are indicated, a container made of resin and containing a liquid or solid, or a package.

### Container

The container includes the container body. The material, shape, size, structure, and color of the container body may be appropriately selected according to applications and are not particularly limited thereto. The material of the container body may be appropriately selected according to applications and is not particularly limited thereto. Examples of the material include resin, glass, or metals. Among these materials, resin and glass, specifically, transparent resin and glass are preferable, and the transparent resin is more preferable. Preferably, biodegradable resin may be used in recycling. Preferably, 100% biodegradable resin is used for the container. However, about 30% biodegradable resin may be used for the container. The environmental load is reduced by using such biodegradable resin. Examples of the resin of the container body include polyvinyl alcohol (PVA), polybutylene adipate terephthalate (PBAT), polyethylene terephthalate succinate, polyethylene (PE), polypropylene (PP), polyethylene terephthalate (PET), polyvinyl chloride (PVC), polystyrene (PS), polyurethane , epoxy, bio polybutylene succinate (PBS), butylene adipate co-terephthalate (PBAT), polyethylene-starch blend, poly(butylene succinate-co-terephthalate), polylactic acid (PLA), poly(3-hydroxybutyrate-co-3-hydroxyhexanoate) (PHBH), polyhydroxyalkanoate (PHA), Bio-PET 30, Bio-polyamide (PA) 610, 410, and 510, Bio-PA1012 and 10T, Bio-PA11T, MXD10, Bio polycarbonate, Bio polyurethane, Bio-Polyethylene, Bio-PET100, Bio-PA11, Bio-PA1010. These may be used alone or in combination thereof. Among these resins, biodegradable resins such as polyvinyl alcohol, polybutylene adipate terephthalate, and polyethylene terephthalate succinate are preferable in terms of the environmental load.

The shape of the container body may be appropriately selected according to applications and is not particularly limited thereto. Examples of the shape of the container body include bottle-shaped, prism-shaped, cylinder-shaped, box-shaped, or cone-shaped. Among these shapes, the bottle shaped is preferable. The bottle-shaped container body (i.e., bottle) has a finish portion (i.e., spout), a shoulder portion integrated with the finish portion, a sidewall portion integrated with the shoulder portion, and a bottom portion integrated with the sidewall portion. The size of the container body may be appropriately selected according to applications and not particularly limited thereto. The structure of the container body is not particularly limited and may be appropriately selected depending on applications. For example, the container may have a single-layer structure or a multi-layer structure. Examples of the color of the container body include colorless transparent, colored transparent, and colored opaque.

### Product

The product includes a container , a content stored in the container, and a sealing to seal the content in container, and other parts according to applications.

### Contents

Examples of the content include liquid, gas, and granular solid. Examples of the liquid include water, tea, coffee, black tea, and soft drink. When the content is a liquid beverage, the liquid beverage may be transparent, or have a color such as white, whitish, darker, black, brown, yellowish, or yellow. Examples of the gas include oxygen, hydrogen, and nitrogen. Examples of the granular solid include, pieces or granules of fruits, vegetables, nata de coco, tapioca, jelly, konjac (konnyaku, yam cake).

### Sealing

The sealing seals the content in the container and is referred to as a container cap or a cap of the container. The material, shape, size, structure, and color of the sealing may be appropriately selected according to applications and are not particularly limited thereto.

A material of the sealing (i.e., sealing material) may be appropriately selected according to applications and is not particularly limited thereto. Examples of material include resin, glasses, metal, and ceramics. Among these materials. resin is preferably used in terms of mouldability. The sealing material of resin may be the same with material examples of the container body described above The color of the sealing may be, for example, colored opaque, or colored transparent. The shape and size of the sealing may be appropriately selected according to applications, as long as the sealing seals the open or the content in the container body and are not particularly limited thereto.

The structure of the sealing may be appropriately selected according to applications and is not particularly limited thereto. For example, the sealing body preferably has a first portion that separates from the container body when the sealing is opened and a second portion that remains on the container body. Preferably, the first portion has a jagged portion on the surface as an anti-slip portion when opening the sealing. Preferably, the second portion has no jagged portion and a flat surface.

### Light Scanning Step and Light Scanner

The light scanning step is a step of scanning a laser light using a deflector and an imaging optical element, and is performed by a light scanner. The light scanner may be provided with the light emitter. The light scanner includes a deflector and an imaging optical element. An example of the deflector includes a galvano scanner. An example of the imaging optical element includes an fθ lens.

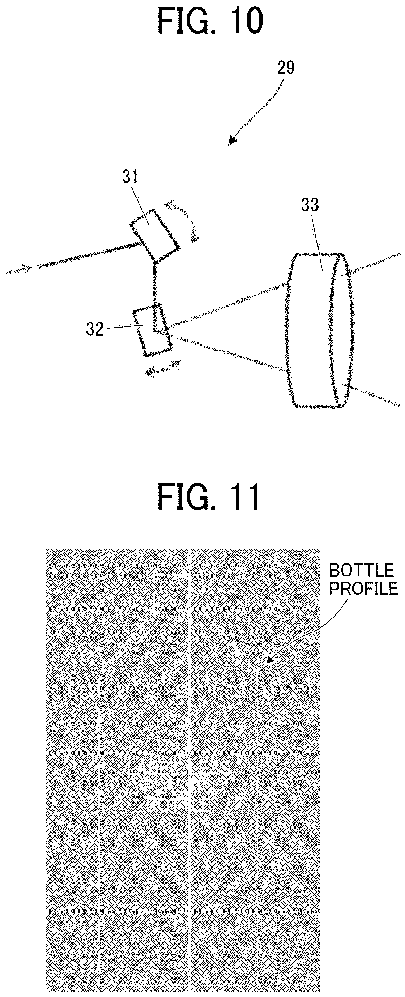

FIG. 10 is a diagram of the light scanner. The light scanner 29 illustrated in FIG. 10 includes a deflector and an imaging optical element. A galvano scanner as the deflector has a two-axial configuration, and includes an X-axis galvano scanner (first scan axis) and a Y-axis galvano scanner (second scan axis). The X-axis galvano scanner includes an X-axis galvanometer and a deflection mirror 31 rotatably attached to the top of the X-axis galvanometer. The Y-axis galvano scanner includes a Y-axis galvanometer and a deflection mirror 32 rotatably attached to the top of the Y-axis galvanometer. The two directions of the two deflection mirrors are orthogonal to each other and scans any position on the workpiece with the laser light by rotating the deflection mirrors.

An fθ lens is used as the imaging optical element. As illustrated in FIG. 10, the fθ lens 33 focuses the laser light deflected by the deflectors on a position displaced from the center of the optical axis of the fθ lens 33 in proportion to an incident angle to the fθ lens 33.

### Conveyance Step and Conveyor

The conveying step is a step of conveying the workpiece to the processing area by the conveyor. An example of the conveyor includes a belt conveyor.

### Other Steps and Other Means

Other steps are not particularly limited and may be appropriately selected depending on the intended purpose. An example of other steps includes a control step. Other units are not particularly limited and may be appropriately selected depending on the intended purpose. An example of the other units includes a control unit.

Embodiments of the present invention will be described in detail with reference to the drawings. In the drawings, the same components are denoted by the same reference numbers, and redundant description may be omitted. In addition, the number, position, and shape of the constituent members described below are not limited to those in the present embodiment, and can be set to the number, position, shape, and the like preferable for carrying out the present embodiment.

### First Embodiment

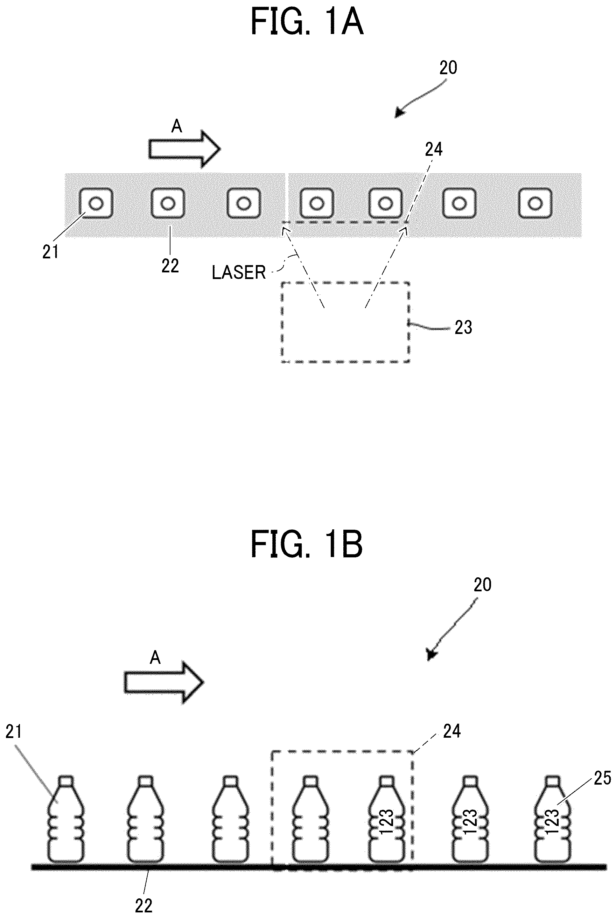

FIG. 1A is a plan view of the laser processing apparatus according to the first embodiment to provide a desired processing shape on surfaces of plastic bottle such as PET bottles as workpieces FIG. 1B is a side view of FIG. 1A. The laser processing apparatus 20 according to the first embodiment includes conveyor 22, and light emitter 23 including light scanner, and processes the workpiece 21. As the light scanner, for example, a light scanner 29 including a deflector and an imaging optical element illustrated in FIG. 10 is used.

PET bottles as workpieces 21 arranged at a predetermined intervals are conveyed to a processing area 24 (i.e., scanning area) at a constant speed by a conveyor 22 in a conveying direction A. The PET bottles are arranged on a conveyor 22 with the longitudinal direction along the gravitational direction. The processing area 24 is determined by settings of an imaging optical element (e.g., an fθ lens) and a galvano scanner as a deflector included in the light emitter 23. The surface of the PET bottle, which is the surface to be processed, and the focal point of the fθ lens are substantially matched. A detection unit detects the position of the PET bottle conveyed in the processing area 24 to process at a predetermined position on the conveying unit 22. In response to a predetermined delay time, the light emitter emits the laser light to the PET bottle to process at the predetermined position. The laser processing is finished in the processing area 24 and the PET bottle having the processing shape 25 is conveyed to the following process by the conveyor 22 at a constant conveying speed.

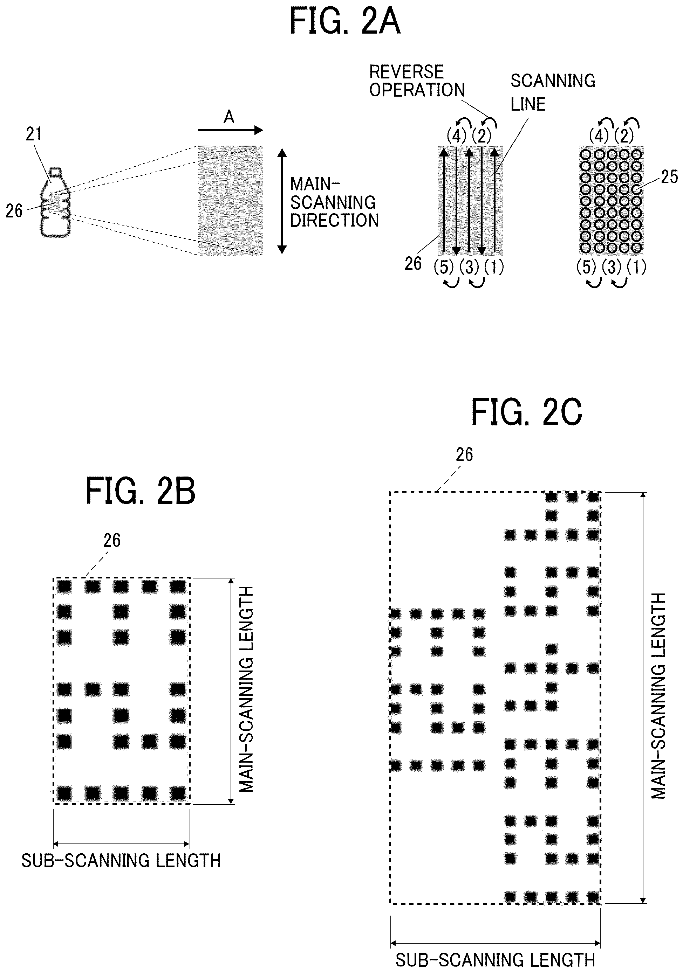

FIG. 2A is a diagram of a scanning operation in the processing area 24. FIG. 2B is a diagram of a processing shape formed on the PET bottle as a workpiece. FIG. 2C is a diagram of another processing shape formed on the PET bottle as a workpiece. In the surface processing of the PET bottle as the workpiece 21, the longitudinal direction of the PET bottle is set to be the gravitational direction, and the PET bottle is conveyed to the processing area 24 by the conveyor 22. The light scanner scans the PET bottle with the laser light in a direction orthogonal to the conveying direction A (i.e., the main-scanning direction) by the galvano scanner. In other words, the PET bottle is reciprocally scanned with the laser light in one-dimension.

In FIG. 2A, the numbers (1) to (5) represent the scanning order, and the scanning starts at the side with the number (start side) and the scanning ends at the opposite side without the number (end side) in one scanning line. Herein, there are five scanning lines (1) to (5). The PET bottle as the workpiece 21 is conveyed by the conveyor 22. When the processing portion 26 reaches a predetermined position, the galvano scanner reciprocally scans the workpiece 21 with the laser light along the scanning line (1). In the main-scanning direction of the processing portion 26, the galvano scanner scans the processing portion 26 with the laser light at a constant speed. When the laser light reaches the end side in the main-scanning direction in the processing portion 26, the galvano scanner decelerates the scanning speed from the constant speed, reverses the scanning direction (i.e., reverse operation), and accelerates the scanning speed to the constant speed in the processing portion 26 to move the scanning line (2). Since the PET bottle is being conveyed during the reverse operation, the position of the scanning light is stopped, and the conveyor 22 moves the PET bottle to start processing of the scanning line (3).

In the processing shape 25 formed on the workpiece 21 illustrated in FIGS. 2B and 2C, a minute concave dot (microstructure) is formed by ablation by pulse emission of laser light. An interval between two minute dots (i.e., dot interval or dot pitch) in the main-scanning direction (i.e., main-scanning resolution) is determined by the frequency of the laser scanning and the scanning speed on the processing portion 26. An interval between two minutes dots (i.e., interval between two scanning lines) in the conveying direction A (i.e., sub-scanning resolution) is determined by the conveying speed of the PET bottle, the main-scanning speed, and the time for the reverse operation.

The processing time ta [s] for processing the processing portion is calculated by an expression (1) below: (1) ta = (Ls/vs + tr) × Lf/25.4 × rf where vs is the scanning speed in the image plane [m/s], rf is the sub-scanning resolution [dpi], tr is the reverse time [s], Ls is the main-scanning length [m], and Lf is the sub-scanning length (in the conveying direction of the PET bottle) [m].

In some embodiments, vs is 50 [m/s], rf is 100 [dpi], tr is 0.001 [s], and Ls, Lf, and ta are as follows.

### Example 1

Ls is 50.8 mm (50.8 × 10⁻³ m), Lf is 25.4 mm (25.4 × 10⁻³ m), and the area is 1,290 mm². Using the expression (1), ta is 0.20 seconds.

### Example 2

Ls is 25.4 mm (25.4 × 10⁻³ m), Lf is 50.8 mm (50.8 × 10⁻³ m), and the area is 1,290 mm². Using the expression (1), ta is 0.30 seconds.

### Example 3

Ls is 35.9 mm (35.9 × 10⁻³ m), Lf is 35.9 mm (35.9 × 10⁻³ m), and the area is 1,290 mm². Using the expression (1), ta is 0.24 seconds.

In the three examples described above, the areas are the same (1,290 mm² ), and Ls and Lf are different each other. The processing times ta are also different. In the example 1 among three examples, Ls is the longest, and ta is minimum.

As described above, the processing time is calculated by the expression (1). In the first term of the right side in the expression (1), the reverse time tr is added to the processing time in the main-scanning direction (Ls/vs), and the first term (Ls/vs + tr) is multiplied by the number of the scanning lines in the sub-scanning direction. Thus, when the number of the scanning lines in the sub-scanning direction is smaller, the processing time ta becomes shorter. In FIG. 2A, FIG. 2B, and FIG. 2C, the processing portion 26 has the longer length in the main-scanning direction (i.e., the main-scanning length) and the shorter length in the sub-scanning direction (i.e., the sub-scanning length). The sub-scanning direction (i.e., the conveying direction A) is orthogonal to the main-scanning direction. As described above, a processing portion having a longer main-scanning length (i.e., example 1) has a shorter processing time in comparison to a processing portion of a square shape (i.e., example 3) or a processing portion having a shorter main-scanning length and a longer sub-scanning length (i.e., example 2). In other words, non-processing time is caused by reciprocal scanning by the galvano scanner (reverse operation). In order to reduce non-processing time and increase the processing speed and the productivity, the sub-scanning length of the processing portion is set to be shorter.

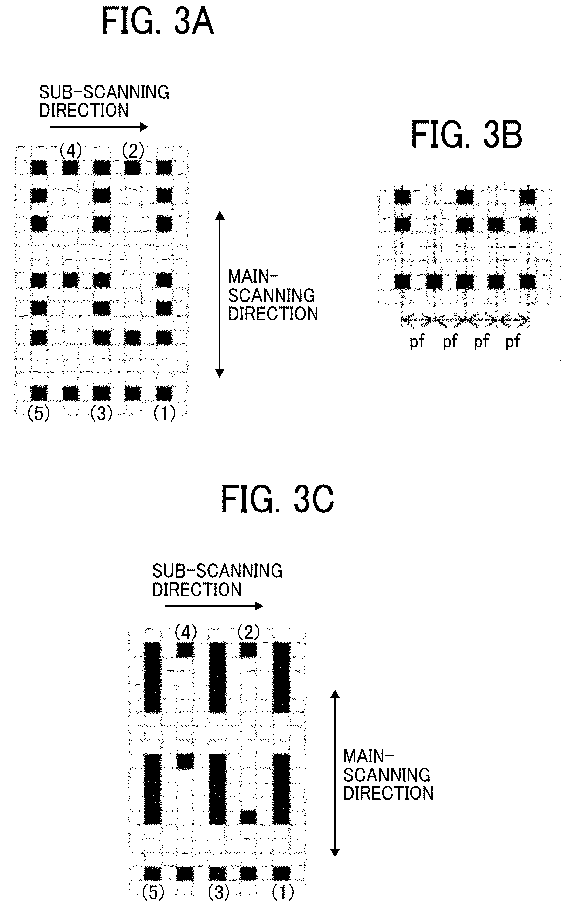

FIG. 3A is a diagram of an example of a character string (i.e., string of numbers: 1 2 3) formed by the laser processing. Each number of the string is formed by minute concave dots. The conveying direction A of the PET bottle and the main-scanning direction (FIG. 2A) match. In FIG. 3A, the numbers (1) to (5), which are similar to the numbers (1) to (5) in FIG. 2A, represent the scanning order, and the scanning starts at the side with the number and the scanning ends at the opposite side without the number in one scanning line. Herein, there are five scanning lines (1) to (5). In FIGS. 3A and 3B, one dot (i.e., black square) represents the resolution. The laser turns on and form a minute concave dot in response to an input data. In the scanning lines (1) to (5), an interval (pf) between adjacent two scanning lines (FIG. 3B) is provided in a resolution predetermined in the sub-scanning direction. For example, in the case of 100 dot per inch (dpi), the interval is 254 µm. According to the expression (1) described above, preferably, the processing length in the main-scanning direction is longer than the processing length in the sub-scanning direction to reduce the processing time. In FIG. 3A, the length in the main-scanning direction is seven lines and the length in the sub-scanning direction is five lines. When the character is formed by an aggregate of minute concave dots, preferably a certain interval is provided in the sub-scanning direction (FIG. 3A), and the main-scanning length is set to be longer than the sub-scanning length in the scanning area to reduce the processing time.

The character string illustrated in FIG. 3C is a modification of the character string illustrated FIG. 3A. As described above, the processing time (ta) depends on the number of scanning lines in the sub-scanning direction. In FIG. 3C, the main-scanning resolution is increased while the number of the sub-scanning line is still five. In the main-scanning direction, the minute concave dots are formed continuously in a line-shaped. In FIG. 3C, the interval between the minute concave dots is constant in the main scanning direction. However, since increasing the resolution in the main-scanning direction does not contribute to the processing time, the visibility of the characters formed by the processing shape is increased while the processing time is kept. In order to connect the minute concave dots in the main-scanning direction in a line, the resolution may be increased or the input data may be changed into a line shape. The visibility of the character and the resolution in the sub-scanning direction are preferably set according to applications without increasing the number of the scanning line in the sub-scanning direction.

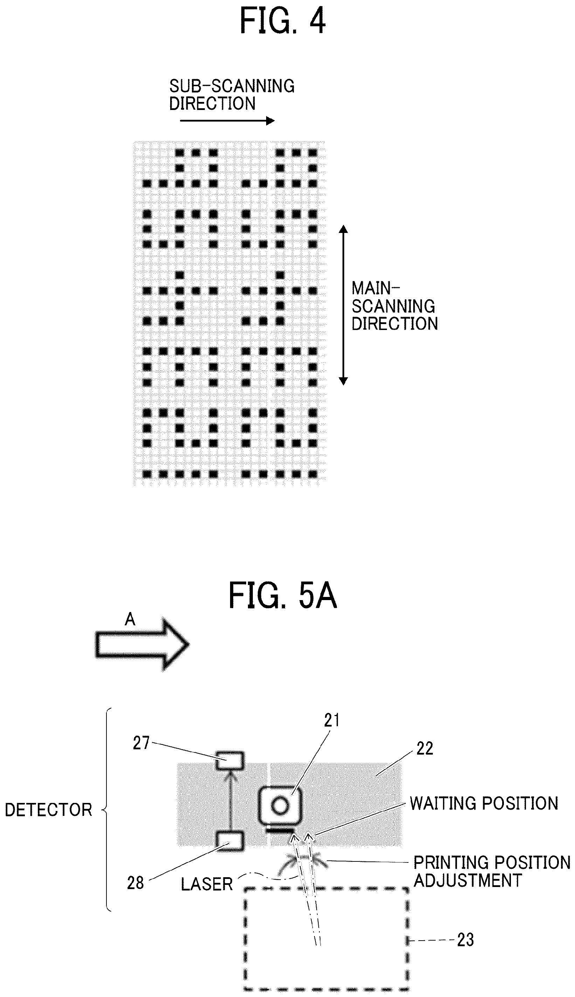

FIG. 4 is a diagram of a processing shape including two character stings (i.e., the number string of 1 2 3 4 5 6) aligned side by side in the sub-scanning direction. In one character string, there is five lines (minute dots) in the sub-scanning direction as in the FIG. 3A. A predetermined interval (i.e., a blank portion) is provided between the character strings in the sub-scanning direction, and the processing shape (i.e., processing data) is not provided in the area (i.e., blank portion). If there is processing data between character strings, one line is additionally scanned and the processing time increases. Thus, the blank portion is provided between the character strings at predetermined intervals in the sub-scanning direction.

### Second Embodiment

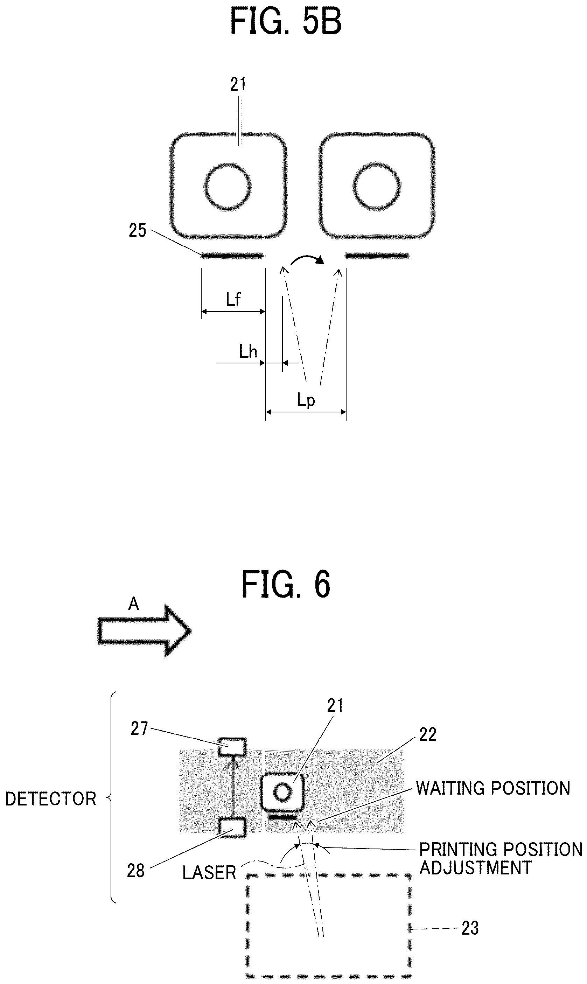

FIG. 5A is a diagram of the light scanner that scans the PET bottle (i.e., workpiece 21) with the laser light in sub-scanning direction according to the second embodiment. In FIG. 5B, an enlarged view of the PET bottle and the surroundings in FIG. 5A is illustrated. The light scanner includes a two-axial galvano scanner as a deflector. The two-axial galvano mirror includes a first scan axis and a second scan axis. The first scan axis scans the PET bottle in the conveying direction (i.e., sub-scanning direction) at a constant speed with the laser light, and the second scan axis scans the PET bottle in the longitudinal direction (i.e., main-scanning direction) with the laser light. The scanning by the first scan follows the PET bottle being conveyed in the conveying direction (i.e., sub-scanning direction). The scanning by the second scan axis in the longitudinal direction is the same with the scanning described above (FIG. 2A). The scanning by the first scan axis in the sub-scanning direction will be described below. As illustrated in FIG. 5A, the PET bottle as the workpiece 21 is conveyed by the conveyor 22, and the processing starts when the processing portion of the PET bottle reaches the printing start position. In the vicinity of the printing start position, the sub-scanning axis (i.e., the first scan-axis) of the galvano scanner scans the PET bottle with the laser light at a constant speed slower than the conveying speed of the PET bottle. The light scanner 29 continues to scan the processing portion at a constant speed until the processing portion reaches the printing end position. When the processing is completed, the light scanner 29 returns to the initial position for the following processing and waits for the PET bottle. By repeating the processing described above, the sub-scanning axis (i.e., the first scan axis) of the galvano scanner is operated at a frequency corresponding to single bottle interval.

In some embodiments, Lf is 50.8×10⁻³ [m], Lh is 0.01 [m], vp is 50 ×10⁻³ [m/s], and Lp is 100 ×10⁻³ [m/s]. Herein, Ls is the main-scanning length [m], Lh is the light waiting position to the top of the processing portion in the following processing, vp is the speed of the sub-scanning, and Lp is the interval between the scanning lines in the sub-scanning direction.

In the case where the sub-scanning is used (i.e., sub-scanning use) for following the PET bottle being conveyed in the sub-scanning direction, the productivity of the PET bottle for one scanning line is calculated below. (Lf + Lh)/vp = 1. 21 seconds. Herein, (Lf + Lh)/vp is a time for which one scanning line passes. In contrast, in the case where the sub-scanning is not used (i.e., sub-scanning non-use), the productivity of the PET bottle for one scanning line is calculated below. (Lf + Lp)/vp = 3. 06 seconds.

Thus, the productivity for one scanning line of the sub-scanning use is higher than that of the sub-scanning non-use. In the case of the sub-scanning non-use, the non-processing portion of the processing portion before and after conveying the PET bottle causes the waiting time. In contrast, in the case of the sub-scanning use, the waiting time is reduced because the scanning jumps to the waiting position waiting for the following processing after completed the previous processing. The productivity is increased by reducing the non-processing time as much as possible in the process conveying the PET bottle.

### Third Embodiment

FIG. 6 is a diagram of a laser processing apparatus according to a third embodiment for detecting the position of a PET bottle being conveyed. The position of the PET bottle as the workpiece 21 conveyed by the conveyor 22 is detected by a detection unit. The detection unit includes a light projection part 27 and a light receiving part 28. The light projection part 27 and the light receiving part 28 are arranged at opposite sides each other across the PET bottle. The light projection part 27 emits laser light such as infrared light. The light receiving part 28 includes a light receiving element such as a photoelectric conversion element, and the light receiving element receives the laser light emitted from the light projection part 27. The light receiving part 28 detects a detection signal. The PET bottle passes through a space between the light projection part 27 and the light receiving part 28. The detection signal is changed, and the light receiving part 28 determines the position of the PET bottle. After the waiting time corresponding to the distance between the detection unit and the optical scanner based on the positional information, laser emission starts and the laser processing starts.

The operation of the galvano scanner in the sub-scanning axis will be described. The deflection surface of the sub-scanning axis of the galvano scanner waits at a predetermined position (angle) during the non-processing time. When there is a deviation in the distance calculated from the conveying speed of the positional information on the PET bottle detected by the detection unit and the predetermined waiting time with respect to the distance between the detection unit and the position of optical axial deflected by the galvano scanner, the sub-scanning axis of the galvano scanner deflects so as to correct the deviation, and moves the optical axis to the printing start position. The laser emission starts based on the positional information obtained by the detection unit after the predetermined waiting time with respect to the position at which the PET bottle is conveyed. The waiting position of the deflection surface of the galvano scanner in the sub-scanning axis may put on any position, or may be adjusted in a position corresponding to the distance previously calculated from the printing start timing from the detection unit (i.e., printing position adjustment), the waiting time. and the conveyance speed. The optical axis may be aligned with the printing start position before the PET bottle is conveyed to the printing start position.

The processing area is enlarged, and a larger amount of information is printed in the processing area accordingly by increasing the productivity. When the amount of information is limited, the speed of the production (i.e., productivity) becomes higher. As described above, the ratio of processing time of the main-scanning direction is increased by preferably setting the aspect ratio of the processing area, and the ratio of processing time of the sub-scanning direction is increased by following the sub-scanning by the deflector in the sub-scanning direction. As a result, speed of the laser processing becomes higher.

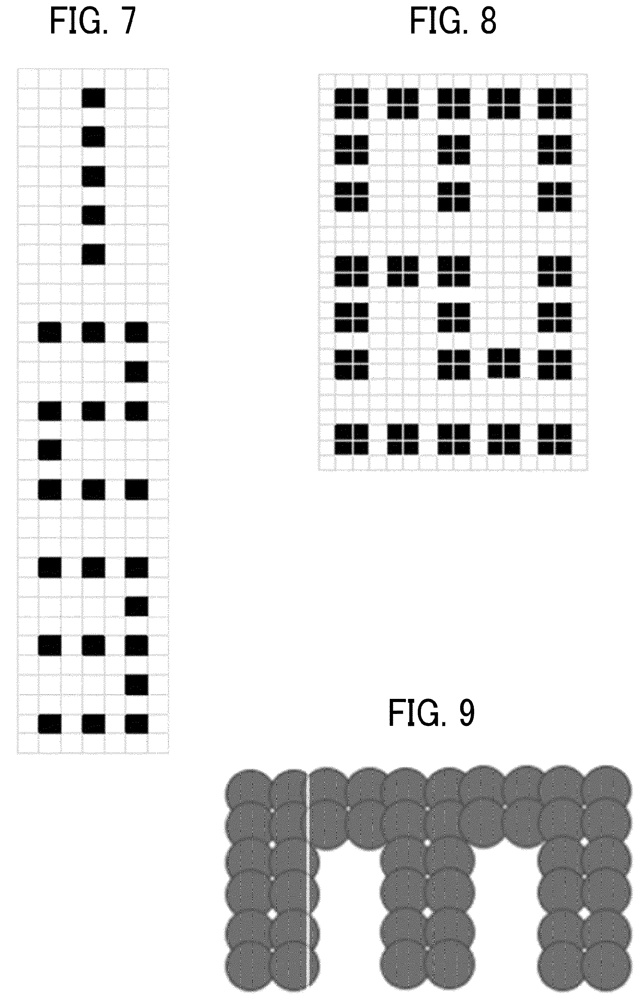

In the present embodiment, the PET bottle produced by a blow molding (i.e., blow-molded PET) is used for the laser processing as specific example. In some embodiments, the laser processing described above is applied to a preform of a bottle before forming as the final product. The workpiece is not limited to a PET bottle. Resin materials, containers, or package, which includes a liquid or solid content, having a display such as ingredients, an expiration date, a manufacturer logo, or a product name are also used. In FIG. 3A, the string of numbers is formed by multiple minutes dots (i.e., minute concave dots) along the main-scanning direction. The direction of the character is not limited thereto. As illustrated in FIG. 7, each number of the string is rotated by 90 degrees in a clockwise direction. The characters are not limited to numbers. Many kinds of characters or symbols (e.g., alphabet, kanji, hiragana) are used. As illustrated in FIG. 8, a character may be composed of multiple dots. As illustrated in FIG. 9, a character may be composed of multiple minute dots overlapped each other.

### Fourth Embodiment

A minute concave dot (concave microstructure) formed by laser processing, and a marking using an aggregate of the minute concave dots, and a printing (processing) apparatus according to the fourth embodiment will be described below.

The present embodiment provides the laser processing method for forming (printing) character strings with higher resolution on a container such as a PET bottle without painting or mixing other materials. In the present embodiment, information that is typically printed on a plastic label is directly printed on the container body. In printing on the container body, minute dots are formed on a portion of the surface (i.e., a printing portion) of the container. In the printing portion, a property of the surface (surface property) is changed so as to have a different optical property from other portions (i.e., a non-printing portion).

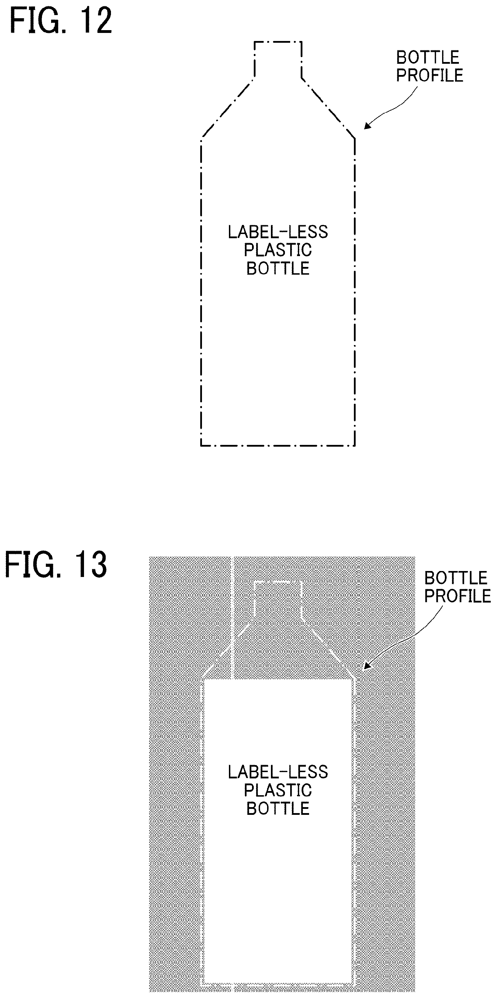

FIG. 11 is a diagram of the external appearance of the container according to the present embodiment as an example. The printing portion of the container forms character strings by changing the surface property of the container. In the example, the container contains a content having a darker color or the background is darker, and the printing portion (i.e., character strings) is whitish or white. In FIG. 11, the content or the background is darker or black, and the printing surface is whitish or white. In contrast, in FIG. 12, the content is whitish or white, and the printing surface is darker than the non-printing surface by decreasing the transmissivity of the printing surface as compared with that of the non-printing surface. As illustrated in FIG. 13, an aggregate of minute dots (microstructures) may be formed on the non-printing portion.

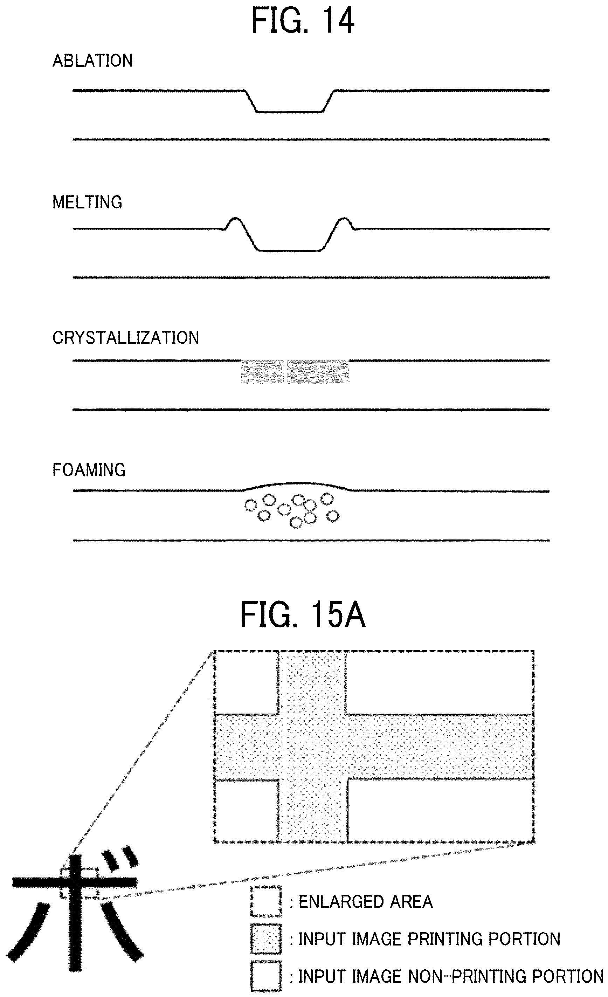

The surface property change that forms each minute dot on the surface of the container body is shape change or physical change. Using some means to change the property, the minute dot is formed by at least any one of the shape change or the physical change. Examples of the surface property change by laser emission are illustrated in FIG. 14. The surface property change illustrated in FIG. 14 is an example and is not limited thereto as long as the surface property has an optical property. For example, yellowing of the resin material, cutting, or oxidation reaction may also be used.

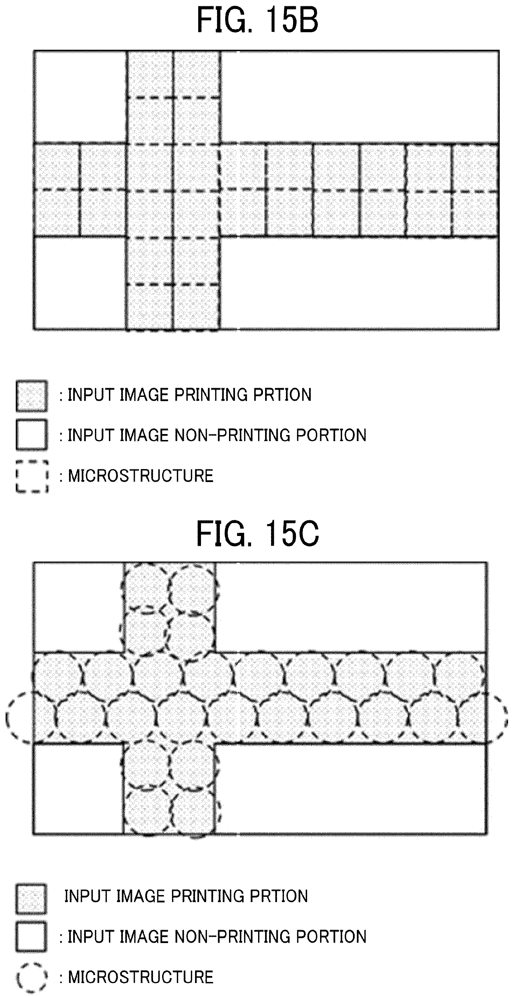

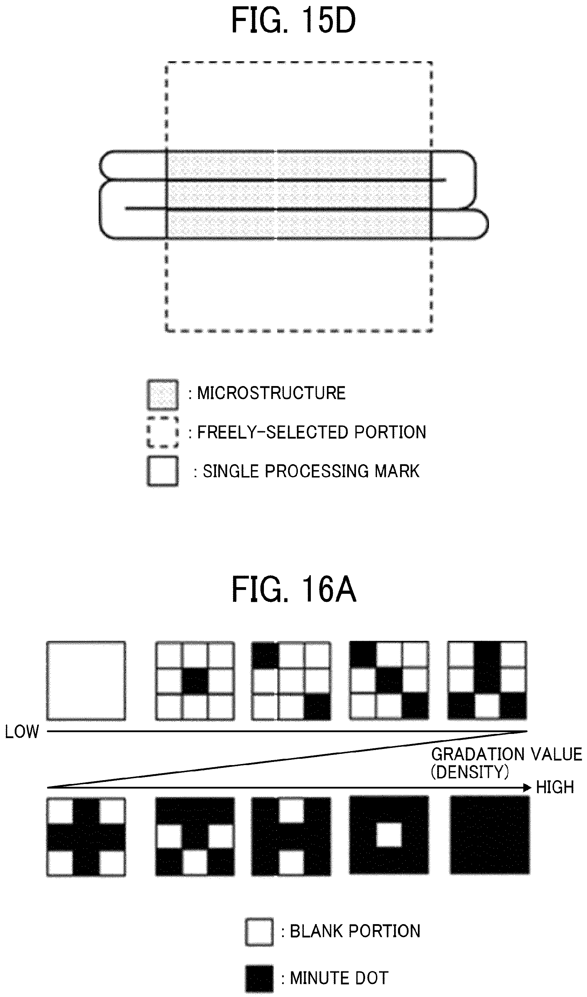

FIGS. 15A to 15D are enlarged images of the printed portion formed by the aggregating minute dots by surface property change on the surface of the container. FIG. 15A is an enlarged image of the printed portion. As illustrated in FIG. 15B, any portion of the printing portion is formed by multiple minute dots. In FIG. 15B, the vertical line or the horizontal line on the printing portion has a line width of two minute dots. But the line width is not limited to two minute dots. In the present embodiment, the shape of the minute dot is square, but is not limited thereto. Depending on conditions of the laser processing, the shape of the minute dot may be circular illustrated in FIG. 15C). The shape of the minute dot (microstructure) is not particularly limited thereto. Depending on the characters printed on the workpiece or a positional condition, an arrangement of the aggregate may be appropriately changed. The minute dots or the microstructures may be aggregate at different timings in a certain area. In some embodiments, the arrangement of the aggregate of the microstructure includes a single line bent several times as an aggregate as illustrated in FIG. 15D.

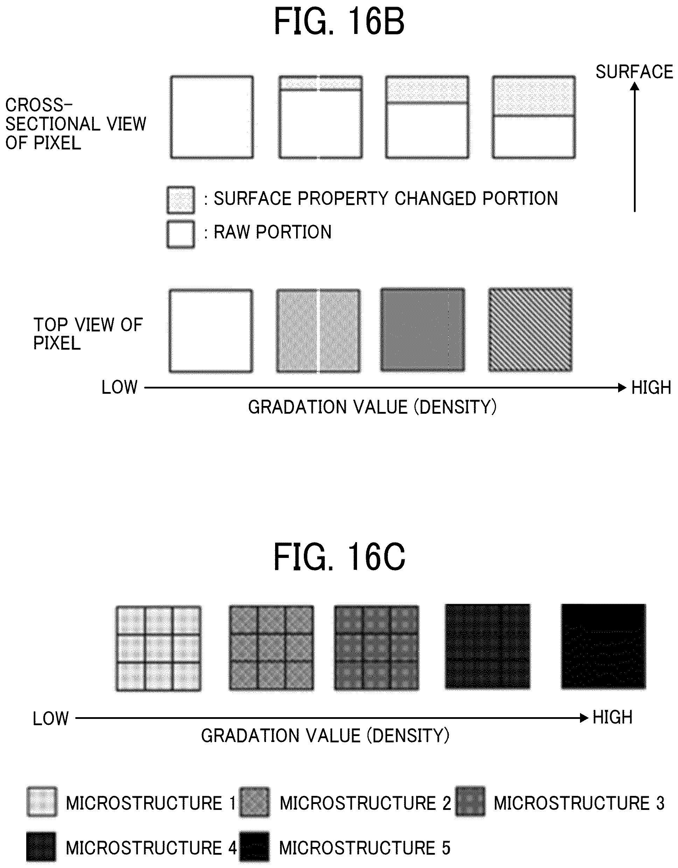

In the present embodiment, the minute dots printed on any portion of the surface of the container body are used for a pixel in order to express gradation value. In FIG. 16A, one square (pixel) is divided by nine small squares (3×3). When the minute dot is formed on the small square, the surface property of the small square is changed, and the color of the small square is changed to black (minute dot) from white (blank portion). Using a ratio of the white small square and the small black square in the one square (i.e., density of the minute dot) can expresses the gradation value. An arrangement of the black square and the white square has a latitude. Any arrangement may express the gradation value. When the gradation value is expressed by using the pixel as illustrated in FIG. 16A, the number of gradation value is determined by the size of the minute dot and the resolution for the pixel. As illustrated in FIG. 16B, the gradation value of the pixel may be expressed by the surface property change in the depth. The gradation value illustrated in FIG. 16B is an example, and is not limited thereto. In some embodiments, as illustrated in FIG. 16C, the gradation value may be changed by changing the optical property of the microstructure.

In the present embodiment, the PET bottle is described as an example of the container. However, the container is not limited to the PET bottle. A transparent container made of, for example, other kinds of resin or glass may be used. The processing method to form the minute dot or the microstructure is not limited to the laser processing. For example, the minute dots or the microstructure may be formed by other methods such as cutting or chemical reaction.

In some embodiments, depending on the color of the content, the printing portion printed on the container containing the content has higher visibility. In the case where the printing portion appears whitish or white, the contrast is higher when the color of the content in the container is darker or black. The other colors having a higher contrast may be brown or colorless. In contrast, in the case where the printing portion appears darker, the contrast is higher when the color of the content in the container is whitish or white. In the case of formation of the minute dots having a darker or black color, carbonization to form the printed portion may be used The container may be colorless or colored.

### Fifth Embodiment

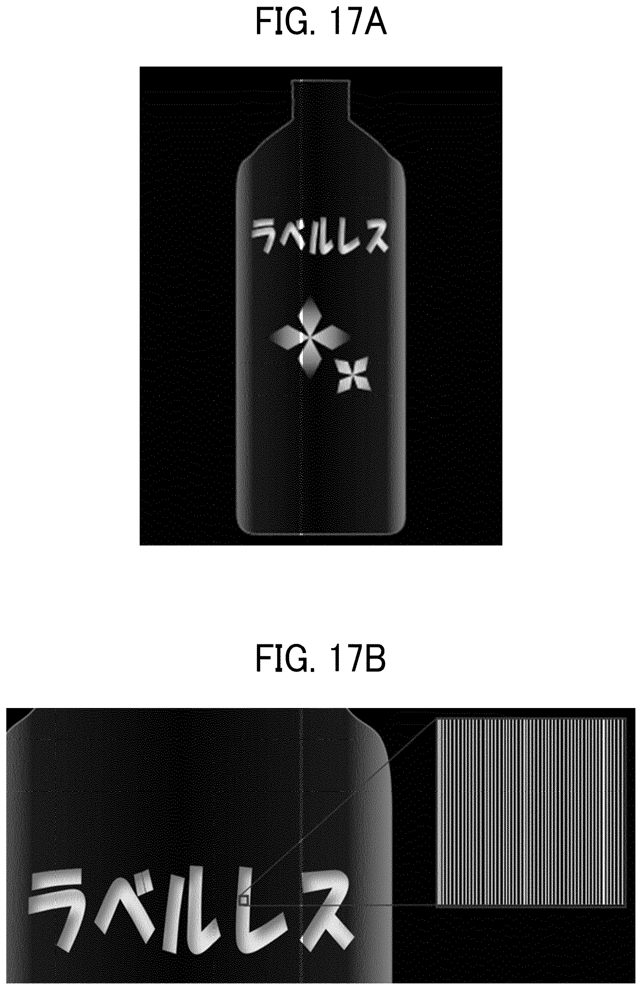

FIG. 17A is a diagram of the container having an integrated printing according to the fifth embodiment. FIG. 17B is an enlarged diagram of the printing portion of FIG. 17A. FIGS. 17A and 17B are the diagrams of the container having an integrated printing, and the printing portion (recognizable portion or white portion) includes an aggregate of multiple microstructures in which the property of the material of the containers is changed.

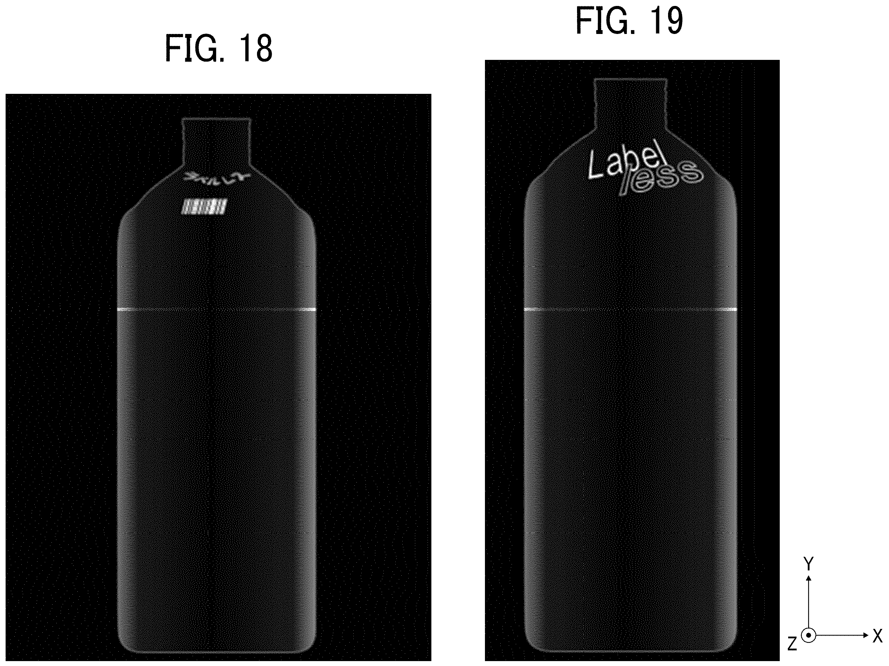

In the present embodiment, the cross section of the container may be a circular shape or a polygonal shape. Thus, the container has multiple surface to be printed and a curved surface, multiple flat surface, or a combination thereof. FIG. 18 is a diagram of the container having an integrated printing printed on a curved surface in the vicinity of a spout portion of the container.

As illustrated in FIG. 19, a coordinate system is set so that a Y-axis are along the longitudinal direction of the container. As viewed from the Y-axis (ZX-plane), the visibility of the printed portion is better than as viewed from the X-axis or Z-axis. When a manufacturer name, a product name, an image, a logo, a QR code (registered trademark), or a bar code is printed on the curved surface of the container, it is easy to understand for workers who packs the container in a box.

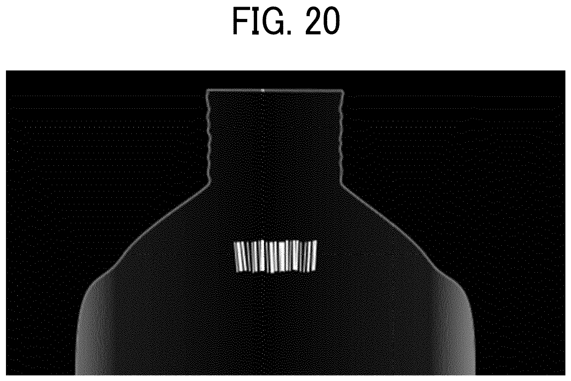

As illustrated in FIG. 20, in order to improve the visibility of the printed portion as viewed from the Y-axis, multiple bars of the bar code are printed on the curved surface so that intervals of the bars are narrower closing to the end of the bars. As a result, the visibility of the bar code is increased.

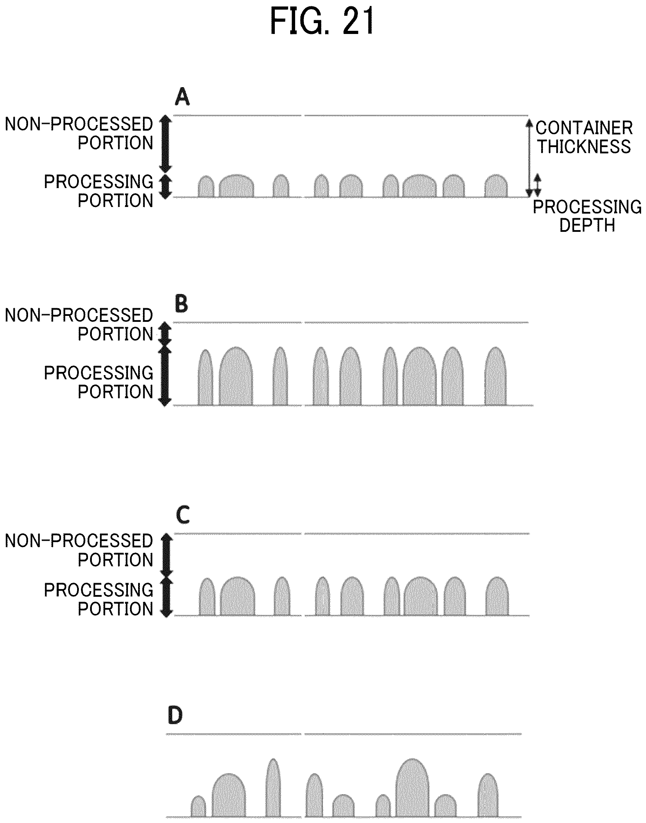

In FIG. 21, diagrams of variations in processing depth are illustrated. As the variations in processing depth, there are four conditions A to D below.

A: The ratio of the processed portion to the non-processing portion is 1 to 9 at lowest and 3 to 7 at highest in the processing depth. In the present condition, the intensity of the laser emission is higher.

B: The ratio of the processed portion to the non-processing portion is 7 to 3 at lowest and 9 to 1 at highest in the processing depth.

C: The ratio of the processed portion to the non-processing portion is 4 to 6 at lowest and 6 to 4 at highest in the processing depth.

D: In a state where various processing depths coexist. variation of information is expanded.

Specifically, in the condition A, when the container thickness is a range from 100 µm to 500 µm, the processing depth is, for example 10 µm. The volume of the container may be 500 mL or 2 L, up to 30 L.

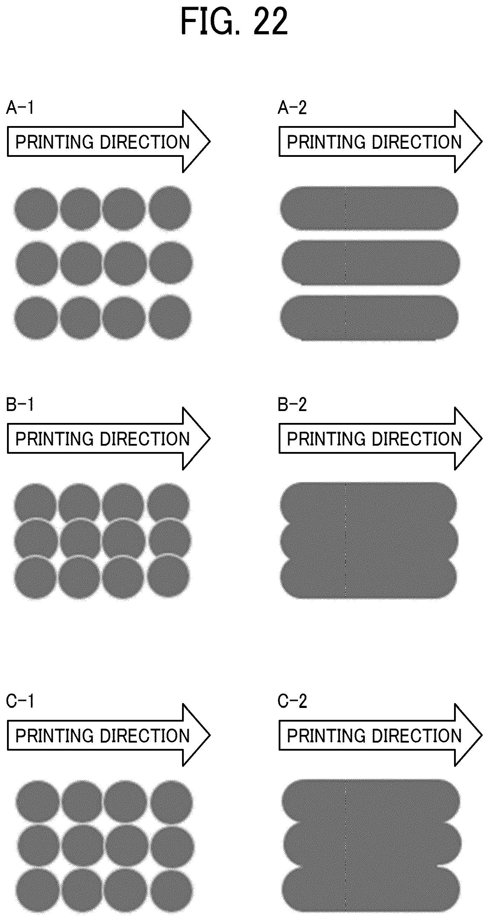

In the laser emission for printing, multiple beams (multi-beam) are used to increase the speed of processing. An arrangement of the multi-beam laser is an 1D arrangement, and there are three variations in the overlap between beams. FIG. 22 is a diagram of spots and overlapped spots of the laser light in multi-beam processing. In terms of the condition A, for example, a processing width is 42.6 µm and the interval is 23.6 µm.

### Sixth Embodiment

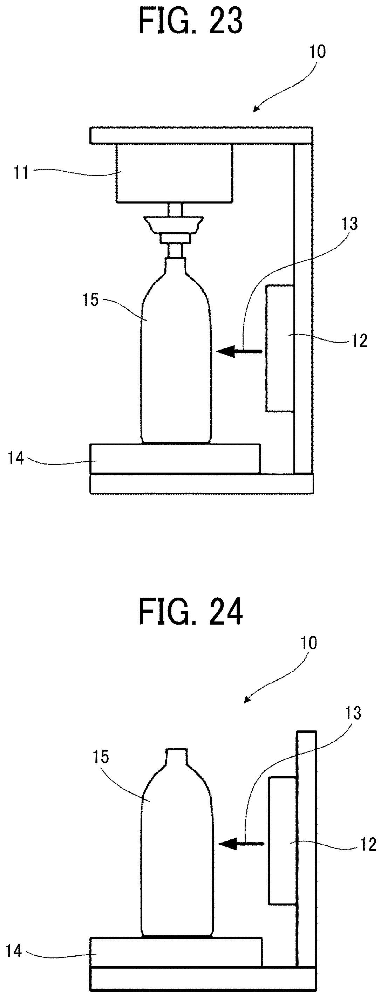

FIG. 23 is a diagram of a laser processing apparatus 10 for a container such as a plastic bottle according to the sixth embodiment as an example. The laser processing apparatus 10 includes a rotation unit 11, a marking unit 12, and a conveyor unit 14. The marking unit 12 emits laser light 13 to the container such as a plastic bottle while rotating the container body 15 by the rotation unit 11 and form a processing shape on the container body 15. The container body 15 being conveyed by the conveyor unit 14 is marked by the marking unit 12 to form the processing shape. The laser processing apparatus 10 illustrated in FIG. 23 is viewed from the moving direction of the conveyor (conveying direction). In some embodiments, the laser is fixed to emit, and the container body 15 is rotated by the rotation unit 11. In some embodiments, the container body 15 is fixed and the laser is moved to emit. When the container body 15 is moved, a synchronized control or a constant-speed rotation control may be used. The synchronized control rotates the container body15 at a certain angle and emits the laser light to perform laser processing (rotation and process), and repeats the rotation and process. The constant-speed rotation control rotates the container at constant speed and performs laser processing. The container hold part may hold the spout portion, a side portion, or a bottom portion of the container body 15. The container may be placed vertically, horizontally, or obliquely during the processing.

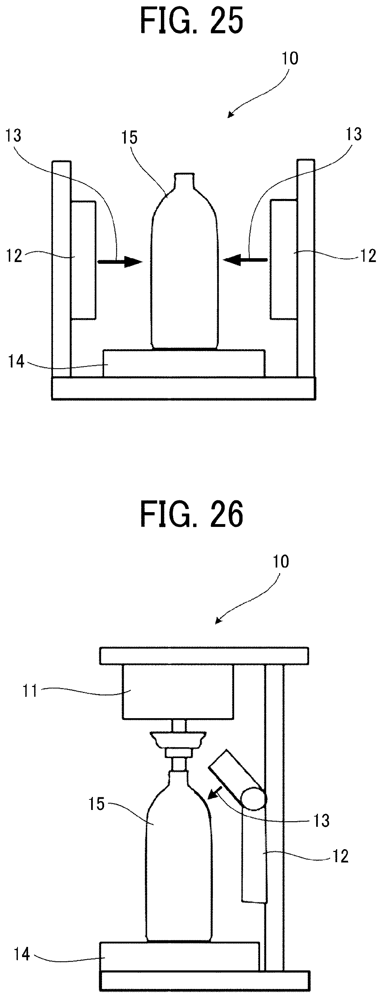

As illustrated in FIG. 24, laser marking may be performed from one side when the PET bottle passes through the conveyor, or as illustrated in FIG. 25, laser marking may be performed simultaneously from multiple positions when the PET bottle passes through the conveyor.

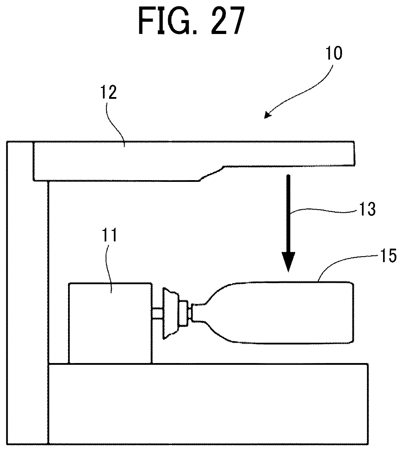

In FIG. 26, the marking unit 12 is arranged to be tilted with respect to a slope portion of the container body 15 so that the marking unit 12 form a processing shape on the slope portion of the container body 15. The marking portion 12 is disposed at a position tilted with respect to the container body 15 at a predetermined angle with respect to the container body 15, and the predetermined angle is changeable. FIG. 27 is an example of a laser processing apparatus 10 to process a container in which the container body 15 is placed horizontally.

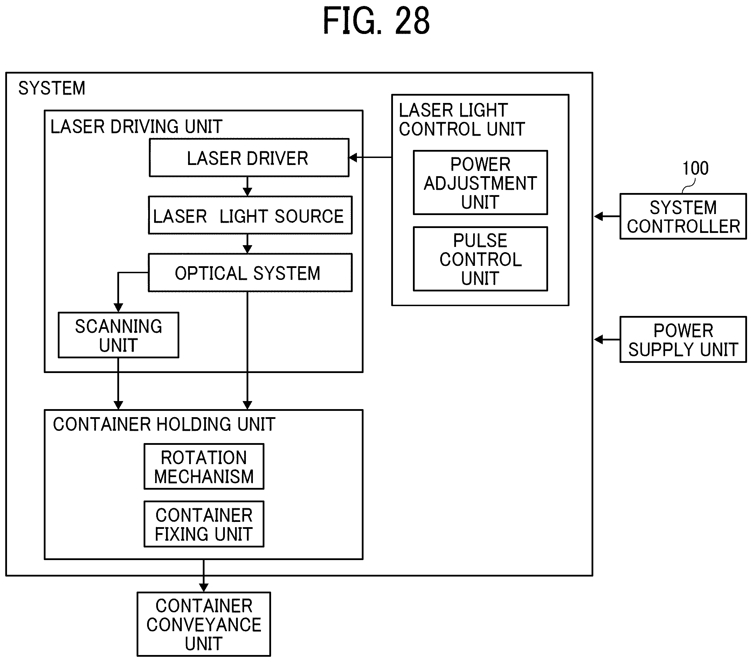

FIG. 28 is a functional block diagram of a marking unit in the laser processing apparatus according to the sixth embodiment. The marking unit includes a laser light control unit, a laser driving unit, and a container holding unit. The container holding unit may not be provided, and the laser driving unit may not be provided with the scanner.

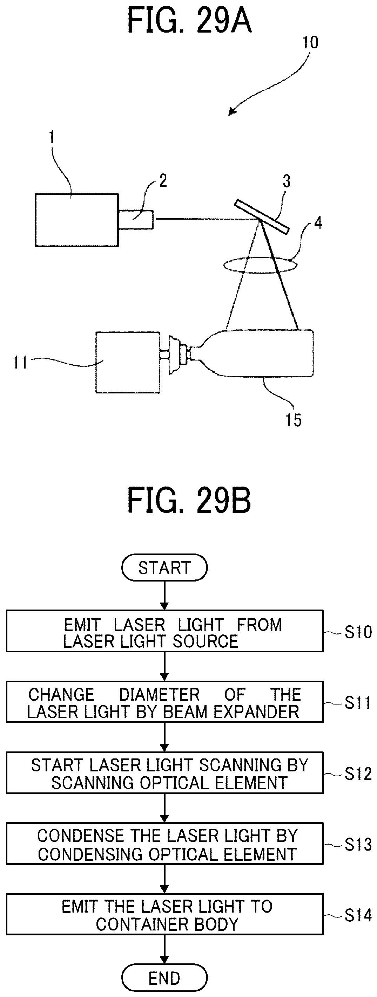

The laser processing apparatus according to the sixth embodiment may include a scanner (raster scanner) of the laser driving unit as illustrated in FIG. 29A. As illustrated in FIG. 29A, the laser processing apparatus 10 includes a laser light source 1 (laser oscillator), a beam expander 2, an optical scanning device 3, a condensing optical element 4, and a rotation unit 11. FIG. 29B is a flowchart of a processing step of a scanner of a laser driving unit in the laser processing apparatus to form a processing shape on the container. The processing steps of the raster scanner will be described with reference to FIG. 29A.

In the step S10, the laser light source 1 emits laser light, the scanner in the laser driving unit of the laser processing apparatus moves the step to the step 11. In the step S11, the beam size of the laser light is changed by the beam expander 2, the laser scanner moves the step to the step 12. In the step S12,the optical scanning device3 starts laser light scanning, the laser scanner moves the step to the step 13. In step S13, the condensing optical element 4 condenses the laser light, the laser scanner moves the step to the step 14. In step S14, the scanner emits the laser light to the container body 15, and the laser scanner finished the step.

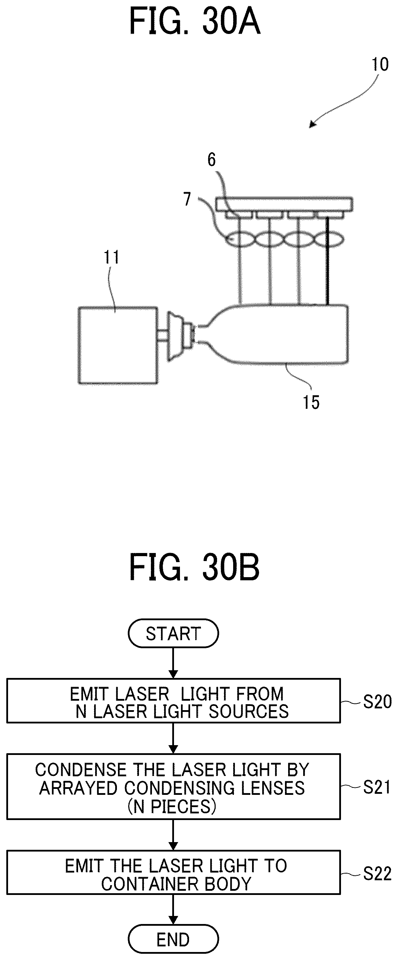

As illustrated in FIG. 30A, the laser processing apparatus 10 includes the laser driving unit in which the optical system is arrayed according to the sixth embodiment. As illustrated in FIG. 30A, the laser processing apparatus 10 includes the laser light source 6 and the rotation unit 11. The laser light source 6 includes multiple optical elements 7 (i.e., arrayed condensing lenses). FIG. 30B is a flowchart of the laser processing in the laser driving unit of the laser processing apparatus according to a sixth embodiment. The steps of the processing of the optical system of the laser driving unit will be described with reference to the FIG. 30A.

In step S20, the laser light sources 6 (including n light sources) emit laser light, the optical system of the laser driving unit of the laser processing apparatus moves to the step to step 21. In Step S21, the multiple optical element 7 (arrayed condensing lenses (including n lenses)) condense the laser light, and the optical system of the laser driving unit moves the step to the step 22. In step S22, the scanner emits the laser light to the container body 15, and the optical system of the laser driving unit finishes the step.

As described above, the embodiments of the present invention have been described in detail, but the embodiments of the present invention is not limited thereto. Various modifications may be made without departing from the scope of the present invention.

Aspects of the present invention are as follows.

In a first aspect, a laser processing apparatus includes: a light emitter to emit laser light; a light scanner to scan a workpiece in a scanning direction with the laser light emitted from the light emitter, to process the workpiece; and a conveyor to convey the workpiece to a scanning area scanned by the light scanner in a conveying direction orthogonal to the scanning direction, a longitudinal direction of the scanning area is in the scanning direction.

In a second aspect, in the laser processing apparatus according to the first aspect, the conveying direction is in a horizontal direction, the scanning direction is in a vertical direction, and a longitudinal direction of the workpiece is in the vertical direction.

In a third aspect, in the laser processing apparatus according to the first aspect, the light scanner further scans the workpiece with the laser light with a certain interval in the conveying direction to form a group of minute dots on the workpiece with the certain interval between the minute dots adjacent with each other.

In a fourth aspect, the laser processing apparatus according to the third aspect, the aggregate of the minute dots forms a character string.

In a fifth aspect, in the laser processing apparatus according to the fourth aspect, the light scanner forms multiple sets of the character string in the scanning direction on the workpiece, and the multiple sets of the character string are at a certain interval in the conveying direction.

In a six aspect, in the laser processing apparatus according to any one of the first aspect to the sixth aspect, the light scanner includes a deflector, and the deflector reciprocally scans the scanning area in the workpiece with the laser light.

In a seventh aspect, in the laser processing apparatus according to any one of the first aspect to the sixth aspect, the deflector is scannable around a first scan axis and a second scan axis directed in a different direction with the first scan axis.

In an eighth aspect, the laser processing apparatus according to the seventh aspect, the deflector scans the workpiece in the conveying direction around the first scan axis, and scans the workpiece in the scanning direction around the second scan axis.

In a ninth aspect, in the laser processing apparatus according to the eighth aspect, a scanning frequency of the deflector in the scanning direction around the second scan axis is faster than a scanning frequency of the deflector in the conveying direction around the first scan axis.

In a tenth aspect, in the laser processing apparatus according to any one of the eighth aspect and the ninth aspect, a scanning speed of the deflector in the conveying direction around the first scan axis is slower than a conveying speed of the workpiece by the conveyor.

In a eleventh aspect, a laser processing method includes: emitting laser light; scanning a workpiece in a scanning direction with the laser light by emitting to process the workpiece; and conveying the workpiece to a scanning area scanned by the scanning in a conveying direction orthogonal to the scanning direction, a longitudinal direction of the scanning area is in the scanning direction.

In a twelfth aspect, in the laser processing apparatus according to the first aspect, the light scanner scans the workpiece with the laser light in a longitudinal direction of the workpiece.

In a thirteenth aspect, in the laser processing method according to the eleventh aspect, a length of the scanning area in the scanning direction is longer than a length of the scanning area in the conveying direction.

In a fourteenth aspect, the laser processing apparatus according to the first aspect further includes: a detector to detect the workpiece conveyed by the conveyor; and circuitry to control the light scanner and the conveyor. The light scanner includes a deflector that deflects the laser light in the conveying direction before the light scanner processes the workpiece; and that deflects the laser light to a start position to process the workpiece, and the circuitry determines a start timing to start processing the workpiece based on a position of the workpiece detected by the detector.

In a fifteenth aspect, the laser processing method according to the eleventh aspect further includes: detecting the workpiece conveyed by the conveying; and deflecting the laser light in the conveying direction before processing the workpiece; and, deflecting the laser light to a start position to process the workpiece, and determining a start timing to start processing the workpiece based on a position of the workpiece detected by the detecting.

According to the laser processing apparatus according to any one of the aspects of 1 to 9, 11 to 12, 14 to 15, and the laser processing method according to any one of aspects of 10, 13, and 16, a laser processing apparatus and a laser processing method directly form a pattern such as an image having a large amount of information with higher resolution at a higher speed are provided.

The above-described embodiments are illustrative and do not limit the present invention, which is exclusively defined by the claims.

Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above. Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

## Claims

1. A laser processing apparatus (20) comprising:
a light emitter (23) configured to emit laser light;
a light scanner (29) configured to scan a workpiece (21) in a scanning direction with the laser light emitted from the light emitter (23), to process the workpiece (21); and
a conveyor (22) configured to convey the workpiece (21) to a scanning area scanned by the light scanner (29) in a conveying direction (A) orthogonal to the scanning direction, a longitudinal direction of the scanning area being in the scanning direction (A);
circuitry configured to control the light scanner and the conveyor;
wherein the light scanner (29) includes a deflector, and
the deflector is configured to reciprocally scan the scanning area in the workpiece (21) with the laser light,
wherein the deflector is scannable around a first scan axis and a second scan axis directed in a different direction with the first scan axis,
wherein the deflector is configured to:
scan the workpiece (21) in the conveying direction (A) around the first scan axis, and
scan the workpiece (21) in the scanning direction around the second scan axis,
the laser processing apparatus (20) further comprises
a detector (27, 28) configured to detect the workpiece (21) conveyed by the conveyor,
wherein the deflector is configured to deflect the laser light in the conveying direction (A) before the light scanner processes the workpiece (21); and,
deflect the laser light to a start position to process the workpiece (20), and
the circuitry determines a start timing to start processing the workpiece based on a position of the workpiece detected by the detector (27,28),
wherein a scanning speed of the deflector in the conveying direction (A) around the first scan axis is slower than a conveying speed of the workpiece by the conveyor,
**characterized in that**
a resolution of the scanning in the conveying direction (A) around the first scan axis is higher than a resolution of the scanning in the scanning direction around the second scan axis.

2. The laser processing apparatus (20) according to claim 1,
wherein the conveying direction (A) is in a horizontal direction,
the scanning direction is in a vertical direction, and
a longitudinal direction of the workpiece (21) is in the vertical direction.

3. The laser processing apparatus (20) according to claim 1,
wherein the light scanner (29) is further configured to scan the workpiece (21) with the laser light with a certain interval in the conveying direction (A) to form an aggregate of minute dots on the workpiece with the certain interval between the minute dots adjacent to each other.

4. The laser processing apparatus (20) according to claim 3,
wherein the aggregate of the minute dots forms a character string.

5. The laser processing apparatus (20) according to claim 4,
wherein the light scanner (29) is configured to form multiple sets of the character string in the scanning direction on the workpiece,
the multiple sets of the character string are at a certain interval in the conveying direction (A).

6. The laser processing apparatus (20) according to any one of claims 1 to 5,
wherein a scanning frequency of the deflector in the scanning direction around the second scan axis is faster than a scanning frequency of the deflector in the conveying direction (A) around the first scan axis.

7. The laser processing apparatus (20) according to any one of claims 1 to 6,
wherein in the light emitter (23) has a wavelength of 355 nm to 1064 nm, a pulse width of 1 picoseconds to 10 nanoseconds, and an average power of 10 to 50W,
wherein a spot diameter of the laser light on which a portion of the workpiece is processed is from 10 µm or larger to 100 µm or smaller.

8. A laser processing method comprising:
emitting laser light (S10);
scanning a workpiece (21) by a light scanner (29) in a scanning direction with the laser light by emitting to process the workpiece (21) (S12, S13); and
conveying the workpiece (21) to a scanning area scanned by the scanning in a conveying direction (A) orthogonal to the scanning direction, a longitudinal direction of the scanning area is in the scanning direction
wherein the light scanner (29) includes a deflector, and
the deflector reciprocally scans the scanning area in the workpiece (21) with the laser light,
wherein the deflector is scannable around a first scan axis and a second scan axis directed in a different direction with the first scan axis,
wherein the deflector scans the workpiece (21) in the conveying direction (A) around the first scan axis, and scans the workpiece (21) in the scanning direction around the second scan axis,
wherein the method further comprises:
detecting the workpiece (21) conveyed by the conveying; and
deflecting the laser light in the conveying direction (A) before processing the workpiece (21); and,
deflecting the laser light to a start position to process the workpiece, and
determining a start timing to start processing the workpiece (21) based on a position of the workpiece (21) detected by the detecting,
wherein a scanning speed of the deflector in the conveying direction (A) around the first scan axis is slower than a conveying speed of the workpiece by the conveyor
**characterized in that**
a resolution of the scanning in the conveying direction (A) around the first scan axis is higher than a resolution in the scanning direction around the second scan axis.

9. The laser processing method according to claim 8,
wherein the light scanner (29) scans the workpiece (21) with the laser light in a longitudinal direction of the workpiece (21).

10. The laser processing method according to claim 8,
wherein a length of the scanning area in the scanning direction is longer than a length of the scanning area in the conveying direction (A).

## Patentansprüche

1. Laserbearbeitungsvorrichtung (20), umfassend:
einen Lichtemitter (23), der so konfiguriert ist, dass er Laserlicht emittiert;
einen Lichtscanner (29), der so konfiguriert ist, dass er ein Werkstück (21) in einer Scanrichtung mit dem vom Lichtemitter (23) emittierten Laserlicht scannt, um das Werkstück (21) zu bearbeiten; und
eine Fördereinrichtung (22), die so konfiguriert ist, dass sie das Werkstück (21) in einer Förderrichtung (A) orthogonal zur Scanrichtung zu einem vom Lichtscanner (29) gescannten Scanbereich fördert, wobei eine Längsrichtung des Scanbereichs in der Scanrichtung (A) liegt;
eine Schaltung, die so konfiguriert ist, dass sie den Lichtscanner und die Fördereinrichtung steuert;
wobei der Lichtscanner (29) einen Deflektor umfasst, und
der Deflektor so konfiguriert ist, dass er den Scanbereich im Werkstück (21) mit dem Laserlicht wechselseitig scannt,
wobei der Deflektor um eine erste Scanachse und eine zweite Scanachse, die in eine andere Richtung als die erste Scanachse ausgerichtet ist, scanbar ist,
wobei der Deflektor so konfiguriert ist, dass er:
das Werkstück (21) in der Förderrichtung (A) um die erste Scanachse scannt und
das Werkstück (21) in der Scanrichtung um die zweite Scanachse scannt,
wobei die Laserbearbeitungsvorrichtung (20) ferner umfasst
einen Detektor (27, 28), der so konfiguriert ist, dass er das von der Fördereinrichtung geförderte Werkstück (21) erfasst,
wobei der Deflektor so konfiguriert ist, dass er das Laserlicht in der Förderrichtung (A) ablenkt, bevor der Lichtscanner das Werkstück (21) bearbeitet; und
das Laserlicht zu einer Startposition ablenkt, um das Werkstück (20) zu bearbeiten, und
die Schaltung einen Startzeitpunkt zum Starten der Bearbeitung des Werkstücks auf der Grundlage einer vom Detektor (27, 28) erfassten Position des Werkstücks bestimmt,
wobei eine Scangeschwindigkeit des Deflektors in der Förderrichtung (A) um die erste Scanachse langsamer ist als eine Fördergeschwindigkeit des Werkstücks durch die Fördereinrichtung,
**dadurch gekennzeichnet, dass**
eine Auflösung des Scannens in der Förderrichtung (A) um die erste Scanachse höher ist als eine Auflösung des Scannens in der Scanrichtung um die zweite Scanachse.

2. Laserbearbeitungsvorrichtung (20) nach Anspruch 1,
wobei die Förderrichtung (A) in einer horizontalen Richtung verläuft,
die Scanrichtung in einer vertikalen Richtung verläuft und
eine Längsrichtung des Werkstücks (21) in einer vertikalen Richtung verläuft.

3. Laserbearbeitungsvorrichtung (20) nach Anspruch 1,
wobei der Lichtscanner (29) ferner so konfiguriert ist, dass er das Werkstück (21) mit dem Laserlicht in einem bestimmten Intervall in der Förderrichtung (A) scannt, um ein Aggregat aus winzigen Punkten auf dem Werkstück mit einem bestimmten Intervall zwischen den benachbarten winzigen Punkten zu bilden.

4. Laserbearbeitungsvorrichtung (20) nach Anspruch 3,
wobei das Aggregat der winzigen Punkte eine Zeichenfolge bildet.

5. Laserbearbeitungsvorrichtung (20) nach Anspruch 4,
wobei der Lichtscanner (29) so konfiguriert ist, dass er mehrere Sätze der Zeichenfolge in der Scanrichtung auf dem Werkstück bildet,
wobei die mehreren Sätze der Zeichenfolge in einem bestimmten Abstand in Förderrichtung (A) angeordnet sind.

6. Laserbearbeitungsvorrichtung (20) nach einem der Ansprüche 1 bis 5,
wobei eine Scanfrequenz des Deflektors in der Scanrichtung um die zweite Scanachse schneller ist als eine Scanfrequenz des Deflektors in der Förderrichtung (A) um die erste Scanachse.

7. Laserbearbeitungsvorrichtung (20) nach einem der Ansprüche 1 bis 6,
wobei der Lichtemitter (23) eine Wellenlänge von 355 nm bis 1064 nm, eine Pulsbreite von 1 Pikosekunde bis 10 Nanosekunden und eine durchschnittliche Leistung von 10 bis 50 W aufweist,
wobei der Spotdurchmesser des Laserlichts, mit dem ein Teil des Werkstücks bearbeitet wird, zwischen 10 µm oder größer und 100 µm oder kleiner liegt.

8. Laserbearbeitungsverfahren, umfassend:
Emittieren von Laserlicht (S10);
Scannen eines Werkstücks (21) durch einen Lichtscanner (29) in einer Scanrichtung mit dem Laserlicht durch Emittieren, um das Werkstück (21) zu bearbeiten (S12, S13); und
Fördern des Werkstücks (21) zu einem durch das Scannen gescannten Scanbereich in einer Förderrichtung (A) orthogonal zur Scanrichtung, wobei eine Längsrichtung des Scanbereichs in der Scanrichtung liegt
wobei der Lichtscanner (29) einen Deflektor umfasst und
der Deflektor den Scanbereich im Werkstück (21) mit dem Laserlicht wechselseitig scannt,
wobei der Deflektor um eine erste Scanachse und eine zweite Scanachse, die in eine andere Richtung als die erste Scanachse ausgerichtet ist, scanbar ist,
wobei der Deflektor das Werkstück (21) in der Förderrichtung (A) um die erste Scanachse scannt und das Werkstück (21) in der Scanrichtung um die zweite Scanachse scannt,
wobei das Verfahren ferner umfasst:
Erfassen des durch das Fördern geförderten Werkstücks (21); und
Ablenken des Laserlichts in Förderrichtung (A) vor der Bearbeitung des Werkstücks (21); und
Ablenken des Laserlichts zu einer Startposition, um das Werkstück zu bearbeiten, und
Bestimmen eines Startzeitpunkts zum Starten der Bearbeitung des Werkstücks (21) auf der Grundlage einer durch das Erfassen erfassten Position des Werkstücks (21),
wobei eine Scangeschwindigkeit des Deflektors in der Förderrichtung (A) um die erste Scanachse langsamer ist als eine Fördergeschwindigkeit des Werkstücks durch die Fördereinrichtung
**dadurch gekennzeichnet, dass**
eine Auflösung des Scannens in der Förderrichtung (A) um die erste Scanachse höher ist als eine Auflösung in der Scanrichtung um die zweite Scanachse.

9. Laserbearbeitungsverfahren nach Anspruch 8,
wobei der Lichtscanner (29) das Werkstück (21) mit dem Laserlicht in einer Längsrichtung des Werkstücks (21) scannt.

10. Laserbearbeitungsverfahren nach Anspruch 8,
wobei eine Länge des Scanbereichs in der Scanrichtung länger ist als eine Länge des Scanbereichs in der Förderrichtung (A).

## Revendications

1. Appareil de traitement laser (20) comprenant :
un émetteur de lumière (23) conçu pour émettre une lumière laser,
un scanner optique (29) conçu pour effectuer un balayage d'un objet de travail (21) dans une direction de balayage avec la lumière laser émise par l'émetteur de lumière (23), afin de traiter l'objet de travail (21), et
un convoyeur (22) conçu pour transporter l'objet de travail (21) vers une zone de balayage balayée par le scanner optique (29) dans une direction de transport (A) orthogonale à la direction de balayage, la direction longitudinale de la zone de balayage étant dans la direction de balayage (A),
un circuit conçu pour commander le scanner optique et le convoyeur ;
le scanner optique (29) comprenant un déflecteur, et
le déflecteur étant conçu pour balayer en va-et-vient la zone de balayage sur l'objet de travail (21) avec la lumière laser,
le déflecteur pouvant effectuer un balayage sur un premier axe de balayage et un deuxième axe de balayage orienté dans une direction différente de celle du premier axe de balayage,
le déflecteur étant conçu pour :
effectuer un balayage de l'objet de travail (21) dans la direction de transport (A) sur un premier axe de balayage, et
effectuer un balayage de l'objet de travail (21) dans la direction de balayage sur un deuxième axe de balayage ;
l'appareil de traitement laser (20) comprenant en outre
un détecteur (27, 28) conçu pour détecter l'objet de travail (21) transporté par le convoyeur ;
le déflecteur étant conçu pour dévier la lumière laser dans la direction de transport (A) avant que le scanner optique ne traite l'objet de travail (21), et
pour dévier la lumière laser vers une position de départ pour traiter l'objet de travail (20), et
le circuit déterminant un moment de départ pour commencer à traiter l'objet de travail en fonction d'une position de l'objet de travail détectée par le détecteur (27, 28),
la vitesse de balayage du déflecteur dans la direction de transport (A) sur un premier axe de balayage étant inférieure à la vitesse de transport de l'objet de travail par le convoyeur,
**caractérisé en ce que**
la résolution du balayage dans la direction de transport (A) sur un premier axe de balayage est supérieure à la résolution du balayage dans la direction de balayage sur un deuxième axe de balayage.

2. Appareil de traitement laser (20) selon la revendication 1,
dans lequel la direction de transport (A) est horizontale,
la direction de balayage est verticale, et
la direction longitudinale de l'objet de travail (21) est verticale.

3. Appareil de traitement laser (20) selon la revendication 1,
dans lequel le scanner optique (29) est en outre conçu pour balayer l'objet de travail (21) avec la lumière laser à un certain intervalle dans la direction de transport (A) afin de former une agrégation de points minuscules sur l'objet de travail avec un certain intervalle entre les points minuscules adjacents les uns aux autres.

4. Appareil de traitement laser (20) selon la revendication 3,
dans lequel l'agrégation de points minuscules forme une chaîne de caractères.

5. Appareil de traitement laser (20) selon la revendication 4,
dans lequel le scanner optique (29) est conçu pour former plusieurs ensembles de la chaîne de caractères dans la direction de balayage sur l'objet de travail,
les multiples ensembles de la chaîne de caractères sont à un certain intervalle dans la direction de transport (A).

6. Appareil de traitement laser (20) selon l'une quelconque des revendications 1 à 5,
dans lequel la fréquence de balayage du déflecteur dans la direction de balayage sur le deuxième axe de balayage est plus rapide que la fréquence de balayage du déflecteur dans la direction de transport (A) sur le premier axe de balayage.

7. Appareil de traitement laser (20) selon l'une quelconque des revendications 1 à 6,
dans lequel l'émetteur de lumière (23) a une longueur d'onde de 355 nm à 1064 nm, une largeur d'impulsion de 1 picoseconde à 10 nanosecondes et une puissance moyenne de 10 à 50 W,
le diamètre de point de la lumière laser sur lequel une portion de l'objet de travail est traitée est supérieur ou égal à 10 µm et inférieur ou égal à 100 µm.

8. Procédé de traitement au laser comprenant :
l'émission d'une lumière laser (S10),
le balayage d'un objet de travail (21) par un scanner optique (29) dans une direction de balayage avec la lumière laser émise pour traiter l'objet de travail (21) (S12, S13), et
le transport de l'objet de travail (21) vers une zone de balayage balayée par le balayage dans une direction de transport (A) orthogonale à la direction de balayage, la direction longitudinale de la zone de balayage étant dans la direction de balayage ;
le scanner optique (29) comprenant un déflecteur, et
le déflecteur balayant en va-et-vient la zone de balayage sur l'objet de travail (21) avec la lumière laser,
le déflecteur pouvant effectuer le balayage sur un premier axe de balayage et un deuxième axe de balayage orienté dans une direction différente de celle du premier axe de balayage,
le déflecteur balayant l'objet de travail (21) dans la direction de transport (A) sur le premier axe de balayage, et balayant l'objet de travail (21) dans la direction de balayage sur le deuxième axe de balayage,
le procédé comprenant en outre :
la détection de l'objet de travail (21) transporté par le convoyeur,
la déviation de la lumière laser dans la direction de transport (A) avant le traitement de l'objet de travail (21), et
la déviation de la lumière laser vers une position de départ pour traiter l'objet de travail, et
la détermination d'un moment de départ pour commencer à traiter l'objet de travail (21) en fonction d'une position de l'objet de travail (21) détectée par la détection,
la vitesse de balayage du déflecteur dans la direction de transport (A) sur un premier axe de balayage étant inférieure à la vitesse de transport de l'objet de travail par le convoyeur,
**caractérisé en ce que**
la résolution du balayage dans la direction de transport (A) sur un premier axe de balayage est supérieure à la résolution dans la direction de balayage sur un deuxième axe de balayage.

9. Procédé de traitement au laser selon la revendication 8,
dans lequel le scanner optique (29) balaye l'objet de travail (21) avec la lumière laser dans la direction longitudinale de l'objet de travail (21).

10. Procédé de traitement au laser selon la revendication 8,
dans lequel la longueur de la zone de balayage dans la direction de balayage est supérieure à la longueur de la zone de balayage dans la direction de transport (A).
